# EUROPEAN PATENT APPLICATION

(11) **EP 4 647 971 A1**
(43) Date of publication of application: **12.11.2025**
(21) Application number: 25174765.5
(22) Date of filing: 07.05.2025
(51) Int. Cl.: G06N 3/08

(54) **SYSTEM AND METHOD FOR MEMORY CREATION**

(30) Priority: 10.05.2024 US 202463645531 P; 01.05.2025 US 202519196035
(71) Applicant: Apple Inc., Cupertino, CA 95014 (US)
(72) Inventor: CIRCLAEYS, Eric, Cupertino, 95014 (US); WANG, Xiaohuan C., Cupertino, 95014 (US); SAKLESHPUR MURALIDHAR, Gautam, Cupertino, 95014 (US); CLARK, Emma. D, Cupertino, 95014 (US); CHATZIDAKIS, Michael, Cupertino, 95014 (US); DUROCHER, Alexis H., Cupertino, 95014 (US); ZHU, Xiangxin, Cupertino, 95014 (US); DUAN, Kun, Cupertino, 95014 (US); BAI, Yuxin, Cupertino, 95014 (US); GARDIAS, Przemyslaw M., Cupertino, 95014 (US); LIU, Xianjing, Cupertino, 95014 (US); FOLDAGER, Jonathan, Cupertino, 95014 (US); O'NEAL, Carra L., Cupertino, 95014 (US)
(74) Representative: Barton, Russell Glen

(57) **Abstract**

The present disclosure generally relates to generating a video corresponding to a memory (e.g., an event or context) from media assets on a device. In some embodiments, the device receives user inputs requesting a video based on a natural language description of a memory. The device sends information of the natural language description to a first machine-learning (ML) model, and receives query tokens, which are used to find media items on the device that match the query tokens. The device sends information representing the found media items to another ML model that determines traits from the media items. These traits are sent to a third ML model to generate a story outline, and the video is generated by comparing the descriptions of shots in the story outline to visual embeddings of the found media assets to curate and arrange them into the video consistent with the story outline.

## Description

### CROSS-REFERENCE TO RELATED APPLICATIONS

This application priority to U.S. provisional application number 63/645,531, titled "SYSTEM AND METHOD FOR MEMORY CREATION," and filed on May 10, 2024, which is expressly incorporated by reference herein in its entirety.

### BACKGROUND

As the storage capacity and processing power of devices continues to increase, coupled with the rise of effortless media sharing between interconnected devices, the size of the average user's library of media items (e.g., photos and videos) is increasing every day.

### BRIEF SUMMARY

However, as libraries of content continue to grow, creating an archive of the user's life and experiences, they simultaneously become more difficult to manage and can become cumbersome to navigate. For example, many libraries arrange media items by default in a substantially chronological order. A user browsing a particular type of photo may wish to see content related to that photo, across their entire library, but does not remember the particular dates associated with the desired relevant content, and thus will be forced to peruse large numbers of media directories until locating the content that they seek. This is inefficient, a waste of user's time and device resources. Accordingly, it is therefore desirable to facilitate the retrieval and presentation of contextually-relevant media content and thereby provide an improved interface for engaging with media content.

Some techniques for retrieving and viewing contextually-relevant content are inefficient. For example, some existing techniques use a complex and time-consuming user interface, which may include multiple key presses or keystrokes. Existing techniques require more time than necessary, wasting user time and device energy. This latter consideration is particularly important in battery-operated devices.

Accordingly, the present technique provides electronic devices with faster, more efficient methods and interfaces for using user input that includes a description of a memory to retrieve contextually-relevant content and generate a video corresponding to the memory.

In some aspects, the techniques described herein relate to a method of generating a video from media assets on a device, the method including: receiving, at the device, a request to generate the video based on one or more user inputs that include a natural language description of a memory to be depicted in the video; sending first information representing the natural language description to a first machine-learning model, and receiving query tokens generated based on the first information; searching the media assets on the device to find first media items that match the query tokens; sending, to a second machine-learning model, second information representing second media items that include the first media items, and receiving traits generated based on the second information; sending third information representing the traits to a third machine-learning model, and receiving a story outline that is based on the third information; selecting, based on the story outline, third media items from the second media items; and arranging and combining the third media items in accordance with the story outline to generate the video depicting the memory associated with the natural language description.

In some aspects, the techniques described herein relate to a method, further including: finding additional media items on the device based on a similarity of the additional media items to the first media items to generate the second media items that include the first media items and the additional media items.

In some aspects, the techniques described herein relate to a method, wherein the first machine-learning model is an adapter of a large language model that is located remotely from the device, and the third machine-learning model is another adapter of the large language model that is located remotely from the device.

In some aspects, the techniques described herein relate to a method, wherein selecting the third media items from the second media items further includes: determining a subset of the second media items by applying information of the story outline together with information of the second media items to a neural network that, in response, outputs labels of the subset of the second media items; and sending instructions including information of the subset of the second media items and the information of the story outline to a fourth machine-learning model, and receiving from the fourth machine-learning model labels of the third media items, wherein the story outline includes a plurality of descriptions of shots in the video, and each media item of the third media items matches a respective description of a shot of the story outline.

In some aspects, the techniques described herein relate to a method, wherein searching the media assets on the device to find the first media items includes performing a metadata search and an embedding search, wherein the metadata search determines matches and/or similarities between the query tokens and metadata of the first media items, and the embedding search determines matches and/or similarities between the query tokens and embeddings of the first media items, the embeddings being visual features that are identified and labeled in the first media items.

In some aspects, the techniques described herein relate to a method, wherein: the story outline includes descriptions of shots for a montage of photos, and selecting the third media items from the first media items includes matching each of the shots to respective photos in the first media items based on similarities between the descriptions of shots and embeddings of the first media items.

In some aspects, the techniques described herein relate to a method, further including: determining, based on the story outline, music that accompanies the video.

In some aspects, the techniques described herein relate to a method, wherein the story outline is subdivided into chapters and the chapters are subdivided into shots, and each of the chapters includes a respective title.

In some aspects, the techniques described herein relate to a method, further including: determining additional traits based on the media assets on the device, the additional traits representing common features in respective clusters of the media assets on the device; and sending, to the third machine-learning model, the additional traits together with the traits and the second information, and receiving the story outline, wherein the story outline, is based on the additional traits, the traits, and the second information.

In some aspects, the techniques described herein relate to a method, further including: retrieving a subset of the media assets based on the natural language description; and displaying the subset of the media assets in a transition user interface while the video is being generated.

In some aspects, the techniques described herein relate to a method of supporting a device to generate a video from media assets on the device, the method including: receiving, at a server, first information from a device, the first information representing a natural language description from a request to generate a video of a memory; applying the first information to a first machine-learning model that generates, in response to the first information, query tokens representing features and/or attributes associated with the memory to look for in media assets on the device; sending, from the server to the device, the query tokens; receiving, at the server, second information from the device, the second information representing features and/or attributes depicted in first media items; applying the second information to a second machine-learning model that generates, in response to the second information, traits of the first media items, and sending the traits to the device; receiving, at the server, information of the traits; and applying the descriptions of second media items to a third machine-learning model that, in response, generates a story outline, wherein the story outline provides a narrative structure for curating and arranging second media items into the video of the memory.

In some aspects, the techniques described herein relate to a method, further including: receiving, at the server, descriptions of second media items; and applying the descriptions of the second media items together with the information of the story outline to a fourth machine-learning model that, in response, selects from the second media items respective media items corresponding to shots described in the story outline, wherein the respective media items are selected based on matching descriptions of the corresponding shots.

In some aspects, the techniques described herein relate to a method, wherein the second machine-learning model has been trained using training data that includes training outlines associated with training videos.

In some aspects, the techniques described herein relate to a method, wherein the first machine-learning model is an adapter to a large language model, and the adapter has been trained using supervised fine-tuning to modify weights of a neural network in the first machine-learning model to provide output traits that include a location, a time, and a setting corresponding to inputs of natural language prompts describing a memory.

In some aspects, the techniques described herein relate to a device including: one or more processors; and a memory storing instructions that, when executed by the one or more processors, configure the device to: receive, at a device, a request to generate a video based on one or more user inputs that include a natural language description of a memory to be depicted in the video; send first information representing the natural language description to a first machine-learning model, and receiving query tokens generated based on the first information; search media assets on the device to find first media items that match the query tokens; send, to a second machine-learning model, second information representing second media items that include the first media items, and receiving traits generated based on the second information; send third information representing the traits to a third machine-learning model, and receiving a story outline that is based on the third information; select, based on the story outline, third media items from the second media items; and arrange and combine the third media items in accordance with the story outline to generate the video depicting the memory associated with the natural language description.

In some aspects, the techniques described herein relate to a device, wherein, when executed by the one or more processors, the instructions further configure the device to: find additional media items on the device based on a similarity of the additional media items to the first media items to generate the second media items, the second media items including the first media items and the additional media items.

In some aspects, the techniques described herein relate to a device, wherein, when executed by the one or more processors, the instructions further cause the device to search the media assets to find the first media items by configuring the device to: perform a metadata search and an embedding search, wherein the metadata search determines matches and/or similarities between the query tokens and metadata of the first media items, and the embedding search determines matches and/or similarities between the query tokens and embeddings of the first media items, the embeddings being visual features that are identified and labeled in the first media items.

In some aspects, the techniques described herein relate to a device, wherein: the story outline includes descriptions of shots for a montage of photos, and the selecting of the third media items from the first media items includes matching each of the shots to respective photos in the first media items based on similarities between the descriptions of shots and embeddings of the first media items.

In some aspects, the techniques described herein relate to a device, wherein, when executed by the one or more processors, the instructions further configure the device to: determine additional traits based on the media assets on the device, the additional traits representing common features in respective clusters of the media assets on the device; and send, to the third machine-learning model, the additional traits together with the traits and the second information, and receiving the story outline, wherein the story outline is based on the additional traits, the traits, and the second information.

In some aspects, the techniques described herein relate to a device, wherein, when executed by the one or more processors, the instructions cause the device to select the third media items from the second media items by configuring the device to: determine a subset of the second media items by applying information of the story outline together with information of the second media items to a neural network that, in response, outputs labels of the subset of the second media items; and send instructions including information of the subset of the second media items and the information of the story outline to a fourth machine-learning model, and receiving from the fourth machine-learning model labels of the third media items, wherein the story outline includes a plurality of descriptions of shots in the video, and each media item of the third media items matches a respective description of a shot of the story outline.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates a block diagram illustrating a portable multifunction device with a touch-sensitive display, in accordance with some embodiments.
FIG. 2 illustrates a portable multifunction device with a touch-sensitive display, in accordance with some embodiments.
FIG. 3A illustrates a block diagram of a system for generating a video based on user input describing a memory, in accordance with some embodiments.
FIG. 3B illustrates a block diagram of another system for generating a video based on user input describing a memory, in accordance with some embodiments.
FIG. 4A illustrates a flow diagram of an example of a method implemented on a portable device to generate a video of a memory based on user inputs, in accordance with some embodiments.
FIG. 4B illustrates a flow diagram of an example of a method implemented on a server to support the portable device to generate the video of the memory based on user inputs, in accordance with some embodiments.
FIG. 5A illustrates an example of a home screen user interface, in accordance with some embodiments.
FIG. 5B illustrates an example of a memory video prompt user interface, in accordance with some embodiments.
FIG. 5C illustrates an example of a user-input user interface, in accordance with some embodiments.
FIG. 5D illustrates an example of a transition from a query initial user interface to a video display user interface, in accordance with some embodiments.
FIG. 5E illustrates an example of a memory video prompt user interface with suggested prompts, in accordance with some embodiments.
FIG. 5F illustrates an example of a user-input user interface that includes a calendar element, in accordance with some embodiments.

### DESCRIPTION OF EMBODIMENTS

The following description sets forth exemplary methods, parameters, and the like. It should be recognized, however, that such description is not intended as a limitation on the scope of the present disclosure but is instead provided as a description of exemplary embodiments.

There is a need for electronic devices that provide efficient methods and interfaces for generating videos associated with memories by using contextually-relevant content. For example, techniques that eliminate extensive manual effort by the user navigating interfaces in order to retrieve content and combine the retrieved content into a video.

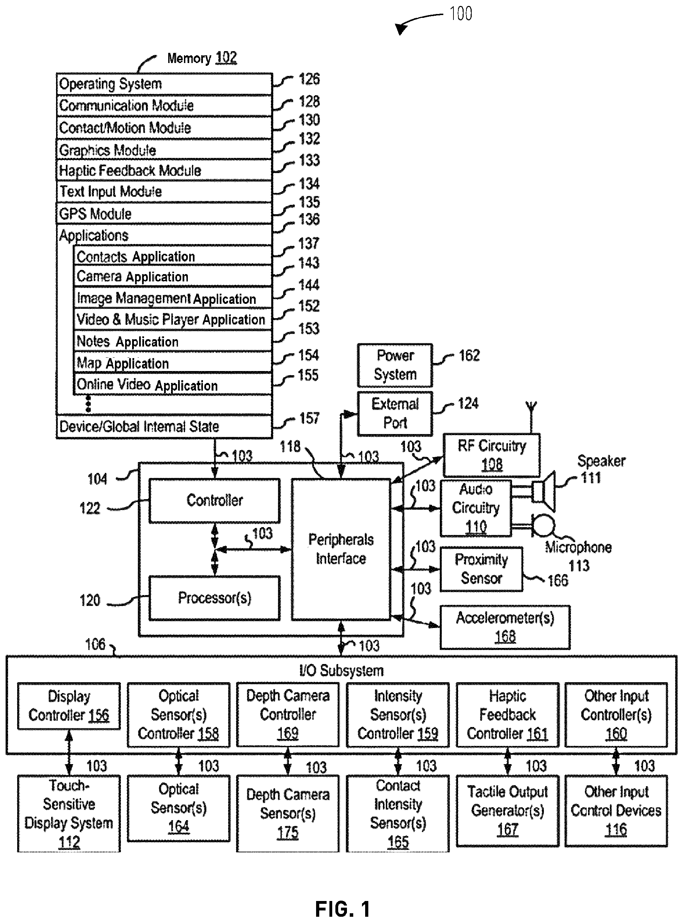

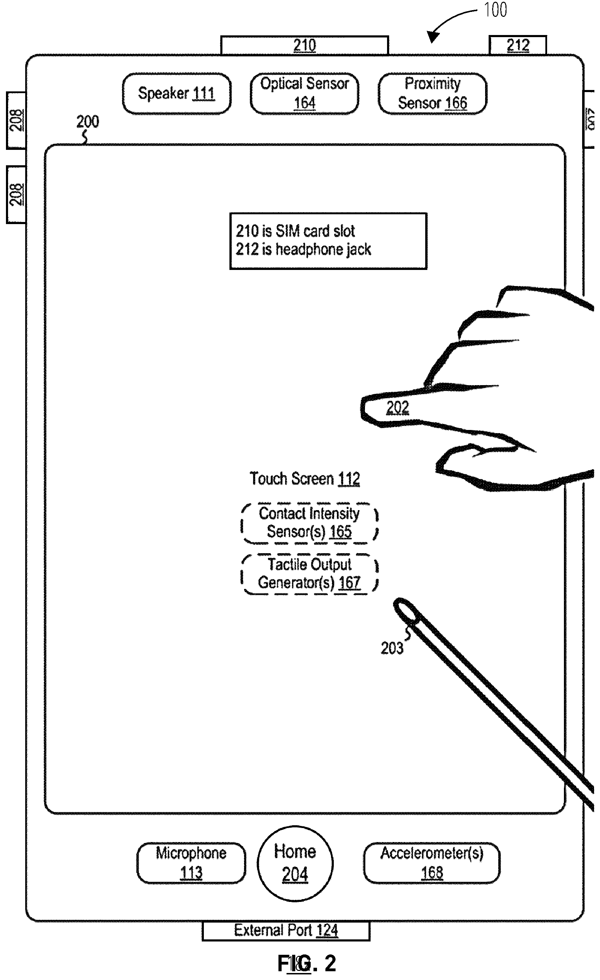

Below, FIG. 1 and FIG. 2 provide a description of exemplary devices for performing the techniques for generating memory movies, as described herein.

Although the following description uses terms "first," "second," etc. to describe various elements, these elements should not be limited by the terms. These terms are only used to distinguish one element from another. For example, a first touch could be termed a second touch, and, similarly, a second touch could be termed a first touch, without departing from the scope of the various described embodiments. The first touch and the second touch are both touches, but they are not the same touch.

The terminology used in the description of the various described embodiments herein is for the purpose of describing particular embodiments only and is not intended to be limiting. As used in the description of the various described embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

The term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Embodiments of electronic devices, user interfaces for such devices, and associated processes for using such devices are described. In some embodiments, the device is a portable communications device, such as a mobile telephone, that also contains other functions, such as PDA and/or music player functions. Exemplary embodiments of portable multifunction devices include, without limitation, the iPhone^{®}, iPod Touch^{®}, and iPad^{®} devices from Apple Inc. of Cupertino, Calif. Other portable electronic devices, such as laptops or tablet computers with touch-sensitive surfaces (e.g., touch screen displays and/or touchpads), are, optionally, used. It should also be understood that, in some embodiments, the device is not a portable communications device, but is a desktop computer with a touch-sensitive surface (e.g., a touch screen display and/or a touchpad).

In the discussion that follows, an electronic device that includes a display and a touch-sensitive surface is described. It should be understood, however, that the electronic device optionally includes one or more other physical user-interface devices, such as a physical keyboard, a mouse, and/or a joystick.

The device typically supports a variety of applications, such as one or more of the following: a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, and/or a digital video player application.

The various applications that are executed on the device optionally use at least one common physical user-interface device, such as the touch-sensitive surface. One or more functions of the touch-sensitive surface as well as corresponding information displayed on the device are, optionally, adjusted and/or varied from one application to the next and/or within a respective application. In this way, a common physical architecture (such as the touch-sensitive surface) of the device optionally supports the variety of applications with user interfaces that are intuitive and transparent to the user.

Attention is now directed toward embodiments of portable devices with touch-sensitive displays. FIG. 1 is a block diagram illustrating portable multifunction device 100 with touch-sensitive display system 112 in accordance with some embodiments. Touch-sensitive display 112 is sometimes called a "touch screen" for convenience and is sometimes known as or called a "touch-sensitive display system." Device 100 includes memory 102 (which optionally includes one or more computer-readable storage mediums), memory controller 122, one or more processing units (CPUs) 120, peripherals interface 118, RF circuitry 108, audio circuitry 110, speaker 111, microphone 113, input/output (I/O) subsystem 106, other input control devices 116, and external port 124. Device 100 optionally includes one or more optical sensors 164. Device 100 optionally includes one or more contact intensity sensors 165 for detecting intensity of contacts on device 100 (e.g., a touch-sensitive surface such as touch-sensitive display system 112 of device 100). Device 100 optionally includes one or more tactile output generators 167 for generating tactile outputs on device 100 (e.g., generating tactile outputs on a touch-sensitive surface such as touch-sensitive display system 112 of device 100). These components optionally communicate over one or more communication buses or signal lines 103.

As used in the specification and claims, the term "intensity" of a contact on a touch-sensitive surface refers to the force or pressure (force per unit area) of a contact (e.g., a finger contact) on the touch-sensitive surface, or to a substitute (proxy) for the force or pressure of a contact on the touch-sensitive surface. The intensity of a contact has a range of values that includes at least four distinct values and more typically includes hundreds of distinct values (e.g., at least 256). Intensity of a contact is, optionally, determined (or measured) using various approaches and various sensors or combinations of sensors. For example, one or more force sensors underneath or adjacent to the touch-sensitive surface are, optionally, used to measure force at various points on the touch-sensitive surface. In some implementations, force measurements from multiple force sensors are combined (e.g., a weighted average) to determine an estimated force of a contact. Similarly, a pressure-sensitive tip of a stylus is, optionally, used to determine a pressure of the stylus on the touch-sensitive surface. Alternatively, the size of the contact area detected on the touch-sensitive surface and/or changes thereto, the capacitance of the touch-sensitive surface proximate to the contact and/or changes thereto, and/or the resistance of the touch-sensitive surface proximate to the contact and/or changes thereto are, optionally, used as a substitute for the force or pressure of the contact on the touch-sensitive surface. In some implementations, the substitute measurements for contact force or pressure are used directly to determine whether an intensity threshold has been exceeded (e.g., the intensity threshold is described in units corresponding to the substitute measurements). In some implementations, the substitute measurements for contact force or pressure are converted to an estimated force or pressure, and the estimated force or pressure is used to determine whether an intensity threshold has been exceeded (e.g., the intensity threshold is a pressure threshold measured in units of pressure). Using the intensity of a contact as an attribute of a user input allows for user access to additional device functionality that may otherwise not be accessible by the user on a reduced-size device with limited real estate for displaying affordances (e.g., on a touch-sensitive display) and/or receiving user input (e.g., via a touch-sensitive display, a touch-sensitive surface, or a physical/mechanical control such as a knob or a button).

As used in the specification and claims, the term "tactile output" refers to physical displacement of a device relative to a previous position of the device, physical displacement of a component (e.g., a touch-sensitive surface) of a device relative to another component (e.g., housing) of the device, or displacement of the component relative to a center of mass of the device that will be detected by a user with the user's sense of touch. For example, in situations where the device or the component of the device is in contact with a surface of a user that is sensitive to touch (e.g., a finger, palm, or other part of a user's hand), the tactile output generated by the physical displacement will be interpreted by the user as a tactile sensation corresponding to a perceived change in physical characteristics of the device or the component of the device. For example, movement of a touch-sensitive surface (e.g., a touch-sensitive display or trackpad) is, optionally, interpreted by the user as a "down click" or "up click" of a physical actuator button. In some cases, a user will feel a tactile sensation such as an "down click" or "up click" even when there is no movement of a physical actuator button associated with the touch-sensitive surface that is physically pressed (e.g., displaced) by the user's movements. As another example, movement of the touch-sensitive surface is, optionally, interpreted or sensed by the user as "roughness" of the touch-sensitive surface, even when there is no change in smoothness of the touch-sensitive surface. While such interpretations of touch by a user will be subject to the individualized sensory perceptions of the user, there are many sensory perceptions of touch that are common to a large majority of users. Thus, when a tactile output is described as corresponding to a particular sensory perception of a user (e.g., an "up click," a "down click," "roughness"), unless otherwise stated, the generated tactile output corresponds to physical displacement of the device or a component thereof that will generate the described sensory perception for a typical (or average) user.

It should be appreciated that device 100 is only one example of a portable multifunction device, and that device 100 optionally has more or fewer components than shown, optionally combines two or more components, or optionally has a different configuration or arrangement of the components. The various components shown in FIG. 1 are implemented in hardware, software, or a combination of both hardware and software, including one or more signal processing and/or application-specific integrated circuits.

Memory 102 optionally includes high-speed random access memory and optionally also includes non-volatile memory, such as one or more magnetic disk storage devices, flash memory devices, or other non-volatile solid-state memory devices. Memory controller 122 optionally controls access to memory 102 by other components of device 100.

Peripherals interface 118 can be used to couple input and output peripherals of the device to CPU 120 and memory 102. The one or more processors 120 run or execute various software programs and/or sets of instructions stored in memory 102 to perform various functions for device 100 and to process data. In some embodiments, peripherals interface 118, CPU 120, and memory controller 122 are, optionally, implemented on a single chip, such as chip 104. In some other embodiments, they are, optionally, implemented on separate chips.

RF (radio frequency) circuitry 108 receives and sends RF signals, also called electromagnetic signals. RF circuitry 108 converts electrical signals to/from electromagnetic signals and communicates with communications networks and other communications devices via the electromagnetic signals. RF circuitry 108 optionally includes well-known circuitry for performing these functions, including but not limited to an antenna system, an RF transceiver, one or more amplifiers, a tuner, one or more oscillators, a digital signal processor, a CODEC chipset, a subscriber identity module (SIM) card, memory, and so forth. RF circuitry 108 optionally communicates with networks, such as the Internet, also referred to as the World Wide Web (WWW), an intranet and/or a wireless network, such as a cellular telephone network, a wireless local area network (LAN) and/or a metropolitan area network (MAN), and other devices by wireless communication. The RF circuitry 108 optionally includes well-known circuitry for detecting near field communication (NFC) fields, such as by a short-range communication radio. The wireless communication optionally uses any of a plurality of communications standards, protocols, and technologies, including but not limited to Global System for Mobile Communications (GSM), Enhanced Data GSM Environment (EDGE), high-speed downlink packet access (HSDPA), high-speed uplink packet access (HSUPA), Evolution, Data-Only (EV-DO), HSPA, HSPA+, Dual-Cell HSPA (DC-HSPDA), long term evolution (LTE), near field communication (NFC), wideband code division multiple access (W-CDMA), code division multiple access (CDMA), time division multiple access (TDMA), Bluetooth, Bluetooth Low Energy (BTLE), Wireless Fidelity (Wi-Fi) (e.g., IEEE 802.11a, IEEE 802.11b, IEEE 802.11g, IEEE 802.11n, and/or IEEE 802.11ac), voice over Internet Protocol (VoIP), Wi-MAX, a protocol for e-mail (e.g., Internet message access protocol (IMAP) and/or post office protocol (POP)), instant messaging (e.g., extensible messaging and presence protocol (XMPP), Session Initiation Protocol for Instant Messaging and Presence Leveraging Extensions (SIMPLE), Instant Messaging and Presence Service (IMPS)), and/or Short Message Service (SMS), or any other suitable communication protocol, including communication protocols not yet developed as of the filing date of this document.

FIG. 2 illustrates a portable multifunction device 100 having a touch screen 112 in accordance with some embodiments. The touch screen optionally displays one or more graphics within user interface (e.g., UI 200). In this embodiment, as well as others described below, a user is enabled to select one or more of the graphics by making a gesture on the graphics, For example, with one or more fingers 202 (not drawn to scale in the figure) or stylus 203 (not drawn to scale in the figure). In some embodiments, selection of one or more graphics occurs when the user breaks contact with the one or more graphics. In some embodiments, the gesture optionally includes one or more taps, one or more swipes (from left to right, right to left, upward and/or downward), and/or a rolling of a finger (from right to left, left to right, upward and/or downward) that has made contact with device 100. In some implementations or circumstances, inadvertent contact with a graphic does not select the graphic. For example, a swipe gesture that sweeps over an application icon optionally does not select the corresponding application when the gesture corresponding to selection is a tap.

Device 100 optionally also include one or more physical buttons, such as "home" or menu button 204. As described previously, menu button 204 is, optionally, used to navigate to any application 136 in a set of applications that are, optionally, executed on device 100. Alternatively, in some embodiments, the menu button is implemented as a soft key in a GUI displayed on touch screen 112.

In some embodiments, device 100 includes touch screen 112, menu button 204, push button 206 for powering the device on/off and locking the device, volume adjustment buttons 208, subscriber identity module (SIM) card slot (e.g., SIM card slot 210), headset jack 212, and docking/charging external port 124. Push button 206 is, optionally, used to turn the power on/off on the device by depressing the button and holding the button in the depressed state for a predefined time interval; to lock the device by depressing the button and releasing the button before the predefined time interval has elapsed; and/or to unlock the device or initiate an unlock process. In an alternative embodiment, device 100 also accepts verbal input for activation or deactivation of some functions through microphone 113. Device 100 also, optionally, includes one or more contact intensity sensors 165 for detecting intensity of contacts on touch screen 112 and/or one or more tactile output generators 167 for generating tactile outputs for a user of device 100.

Audio circuitry 110, speaker 111, and microphone 113 provide an audio interface between a user and device 100. Audio circuitry 110 receives audio data from peripherals interface 118, converts the audio data to an electrical signal, and transmits the electrical signal to speaker 111. Speaker 111 converts the electrical signal to human-audible sound waves. Audio circuitry 110 also receives electrical signals converted by microphone 113 from sound waves. Audio circuitry 110 converts the electrical signal to audio data and transmits the audio data to peripherals interface 118 for processing. Audio data is, optionally, retrieved from and/or transmitted to memory 102 and/or RF circuitry 108 by peripherals interface 118. In some embodiments, audio circuitry 110 also includes a headset jack (e.g., 212, FIG. 2). The headset jack provides an interface between audio circuitry 110 and removable audio input/output peripherals, such as output-only headphones or a headset with both output (e.g., a headphone for one or both ears) and input (e.g., a microphone).

I/O subsystem 106 couples input/output peripherals on device 100, such as touch screen 112 and other input control devices 116, to peripherals interface 118. I/O subsystem 106 optionally includes display controller 156, optical sensor controller 158, intensity sensor controller 159, haptic feedback controller 161, and one or more input controllers 160 for other input or control devices. The one or more input controllers 160 receive/send electrical signals from/to other input control devices 116. The other input control devices 116 optionally include physical buttons (e.g., push buttons, rocker buttons, etc.), dials, slider switches, joysticks, click wheels, and so forth. In some alternate embodiments, input controller(s) 160 are, optionally, coupled to any (or none) of the following: a keyboard, an infrared port, a USB port, and a pointer device such as a mouse. The one or more buttons (e.g., 208, FIG. 2) optionally include an up/down button for volume control of speaker 111 and/or microphone 113. The one or more buttons optionally include a push button (e.g., 206, FIG. 2).

A quick press of the push button optionally disengages a lock of touch screen 112 or optionally begins a process that uses gestures on the touch screen to unlock the device, as described in U.S. patent application Ser. No. 11/324,549, "Unlocking a Device by Performing Gestures on an Unlock Image," filed Dec. 23, 2005, U.S. Pat. No. 7,657,849, which is hereby incorporated by reference in its entirety. A longer press of the push button (e.g., 206) optionally turns power to device 100 on or off. The functionality of one or more of the buttons are, optionally, user-customizable. Touch screen 112 is used to implement virtual or soft buttons and one or more soft keyboards.

Touch-sensitive display 112 provides an input interface and an output interface between the device and a user. Display controller 156 receives and/or sends electrical signals from/to touch screen 112. Touch screen 112 displays visual output to the user. The visual output optionally includes graphics, text, icons, video, and any combination thereof (collectively termed "graphics"). In some embodiments, some or all of the visual output optionally corresponds to user-interface objects.

Touch screen 112 has a touch-sensitive surface, sensor, or set of sensors that accepts input from the user based on haptic and/or tactile contact. Touch screen 112 and display controller 156 (along with any associated modules and/or sets of instructions in memory 102) detect contact (and any movement or breaking of the contact) on touch screen 112 and convert the detected contact into interaction with user-interface objects (e.g., one or more soft keys, icons, web pages, or images) that are displayed on touch screen 112. In an exemplary embodiment, a point of contact between touch screen 112 and the user corresponds to a finger of the user.

Touch screen 112 optionally uses LCD (liquid crystal display) technology, LPD (light emitting polymer display) technology, or LED (light emitting diode) technology, although other display technologies are used in other embodiments. Touch screen 112 and display controller 156 optionally detect contact and any movement or breaking thereof using any of a plurality of touch sensing technologies now known or later developed, including but not limited to capacitive, resistive, infrared, and surface acoustic wave technologies, as well as other proximity sensor arrays or other elements for determining one or more points of contact with touch screen 112. In an exemplary embodiment, projected mutual capacitance sensing technology is used, such as that found in the iPhone^{®} and iPod Touch^{®} from Apple Inc. of Cupertino, Calif.

A touch-sensitive display in some embodiments of touch screen 112 is, optionally, analogous to the multi-touch sensitive touchpads described in the following U.S. Pat. No. 6,323,846 (Westerman et al.), U.S. Pat. No. 6,570,557 (Westerman et al.), and/or U.S. Pat. No. 6,677,932 (Westerman), and/or U.S. Patent Publication 2002/0015024A1, each of which is hereby incorporated by reference in its entirety. However, touch screen 112 displays visual output from device 100, whereas touch-sensitive touchpads do not provide visual output.

A touch-sensitive display in some embodiments of touch screen 112 is described in the following applications: (1) U.S. patent application Ser. No. 11/381,313, "Multipoint Touch Surface Controller," filed May 2, 2006; (2) U.S. patent application Ser. No. 10/840,862, "Multipoint Touchscreen," filed May 6, 2004; (3) U.S. patent application Ser. No. 10/903,964, "Gestures For Touch Sensitive Input Devices," filed Jul. 30, 2004; (4) U.S. patent application Ser. No. 11/048,264, "Gestures For Touch Sensitive Input Devices," filed Jan. 31, 2005; (5) U.S. patent application Ser. No. 11/038,590, "Mode-Based Graphical User Interfaces For Touch Sensitive Input Devices," filed Jan. 18, 2005; (6) U.S. patent application Ser. No. 11/228,758, "Virtual Input Device Placement On A Touch Screen User Interface," filed Sep. 16, 2005; (7) U.S. patent application Ser. No. 11/228,600, "Operation Of A Computer With A Touch Screen Interface," filed Sep. 16, 2005; (8) U.S. patent application Ser. No. 11/228,737, "Activating Virtual Keys Of A Touch-Screen Virtual Keyboard," filed Sep. 16, 2005; (9) U.S. patent application Ser. No. 11/367,749, "Multi-Functional Hand-Held Device," filed Mar. 3, 2006; (10) U.S. patent application Ser. No. 10,073,584, "User Interfaces for Retrieving Contextually Relevant Media Content," filed Sep. 23, 2016; and (11) U.S. patent application Ser. No. 16/145,033, "User Interfaces for Sharing Contextually Relevant Media Content," filed Sep. 27, 2018. All of these applications are incorporated by reference herein in their entirety.

Touch screen 112 optionally has a video resolution in excess of 100 dpi. In some embodiments, the touch screen has a video resolution of approximately 160 dpi. The user optionally makes contact with touch screen 112 using any suitable object or appendage, such as a stylus, a finger, and so forth. In some embodiments, the user interface is designed to work primarily with finger-based contacts and gestures, which can be less precise than stylus-based input due to the larger area of contact of a finger on the touch screen. In some embodiments, the device translates the rough finger-based input into a precise pointer/cursor position or command for performing the actions desired by the user.

In some embodiments, in addition to the touch screen, device 100 optionally includes a touchpad (not shown) for activating or deactivating particular functions. In some embodiments, the touchpad is a touch-sensitive area of the device that, unlike the touch screen, does not display visual output. The touchpad is, optionally, a touch-sensitive surface that is separate from touch screen 112 or an extension of the touch-sensitive surface formed by the touch screen.

Device 100 also includes power system 162 for powering the various components. Power system 162 optionally includes a power management system, one or more power sources (e.g., battery, alternating current (AC)), a recharging system, a power failure detection circuit, a power converter or inverter, a power status indicator (e.g., a light-emitting diode (LED)) and any other components associated with the generation, management and distribution of power in portable devices.

Device 100 optionally also includes one or more optical sensors 164. FIG. 1 shows an optical sensor coupled to optical sensor controller 158 in I/O subsystem 106. Optical sensor 164 optionally includes charge-coupled device (CCD) or complementary metal-oxide semiconductor (CMOS) phototransistors. Optical sensor 164 receives light from the environment, projected through one or more lenses, and converts the light to data representing an image. In conjunction with imaging application 143 (also called a camera module), optical sensor 164 optionally captures still images or video. In some embodiments, an optical sensor is located on the back of device 100, opposite touch screen display 112 on the front of the device so that the touch screen display is enabled for use as a viewfinder for still and/or video image acquisition. In some embodiments, an optical sensor is located on the front of the device so that the user's image is, optionally, obtained for video conferencing while the user views the other video conference participants on the touch screen display. In some embodiments, the position of optical sensor 164 can be changed by the user (e.g., by rotating the lens and the sensor in the device housing) so that a single optical sensor 164 is used along with the touch screen display for both video conferencing and still and/or video image acquisition.

Device 100 optionally also includes one or more contact intensity sensors 165. FIG. 1 shows a contact intensity sensor coupled to intensity sensor controller 159 in I/O subsystem 106. Contact intensity sensor 165 optionally includes one or more piezoresistive strain gauges, capacitive force sensors, electric force sensors, piezoelectric force sensors, optical force sensors, capacitive touch-sensitive surfaces, or other intensity sensors (e.g., sensors used to measure the force (or pressure) of a contact on a touch-sensitive surface). Contact intensity sensor 165 receives contact intensity information (e.g., pressure information or a proxy for pressure information) from the environment. In some embodiments, at least one contact intensity sensor is collocated with, or proximate to, a touch-sensitive surface (e.g., touch-sensitive display system 112). In some embodiments, at least one contact intensity sensor is located on the back of device 100, opposite touch screen display 112, which is located on the front of device 100.

Device 100 optionally also includes one or more proximity sensors 166. FIG. 1 shows proximity sensor 166 coupled to peripherals interface 118. Alternately, proximity sensor 166 is, optionally, coupled to input controller 160 in I/O subsystem 106. Proximity sensor 166 optionally performs as described in U.S. patent application Ser. No. 11/241,839, "Proximity Detector In Handheld Device"; Ser. No. 11/240,788, "Proximity Detector In Handheld Device"; Ser. No. 11/620,702, "Using Ambient Light Sensor To Augment Proximity Sensor Output"; Ser. No. 11/586,862, "Automated Response To And Sensing Of User Activity In Portable Devices"; and Ser. No. 11/638,251, "Methods And Systems For Automatic Configuration Of Peripherals," which are hereby incorporated by reference in their entirety. In some embodiments, the proximity sensor turns off and disables touch screen 112 when the multifunction device is placed near the user's ear (e.g., when the user is making a phone call).

Device 100 optionally also includes one or more tactile output generators 167. FIG. 1 shows a tactile output generator coupled to haptic feedback controller 161 in I/O subsystem 106. Tactile output generator 167 optionally includes one or more electroacoustic devices such as speakers or other audio components and/or electromechanical devices that convert energy into linear motion such as a motor, solenoid, electroactive polymer, piezoelectric actuator, electrostatic actuator, or other tactile output generating component (e.g., a component that converts electrical signals into tactile outputs on the device). Contact intensity sensor 165 receives tactile feedback generation instructions from haptic feedback module 133 and generates tactile outputs on device 100 that are capable of being sensed by a user of device 100. In some embodiments, at least one tactile output generator is collocated with, or proximate to, a touch-sensitive surface (e.g., touch-sensitive display system 112) and, optionally, generates a tactile output by moving the touch-sensitive surface vertically (e.g., in/out of a surface of device 100) or laterally (e.g., back and forth in the same plane as a surface of device 100). In some embodiments, at least one tactile output generator sensor is located on the back of device 100, opposite touch screen display 112, which is located on the front of device 100.

Device 100 optionally also includes one or more accelerometers 168. FIG. 1 shows accelerometer 168 coupled to peripherals interface 118. Alternately, accelerometer 168 is, optionally, coupled to an input controller 160 in I/O subsystem 106. Accelerometer 168 optionally performs as described in U.S. Patent Publication No. 20050190059, "Acceleration-based Theft Detection System for Portable Electronic Devices," and U.S. Patent Publication No. 20060017692, "Methods And Apparatuses For Operating A Portable Device Based On An Accelerometer," both of which are incorporated by reference herein in their entirety. In some embodiments, information is displayed on the touch screen display in a portrait view or a landscape view based on an analysis of data received from the one or more accelerometers. Device 100 optionally includes, in addition to accelerometer(s) 168, a magnetometer (not shown) and a GPS (or GLONASS or other global navigation system) receiver (not shown) for obtaining information concerning the location and orientation (e.g., portrait or landscape) of device 100.

In some embodiments, the software components stored in memory 102 include operating system 126, communication module (or set of instructions) 128, contact/motion module (or set of instructions) 130, graphics module (or set of instructions) 132, text input module (or set of instructions) 134, Global Positioning System (GPS) module (or set of instructions) 135, and applications (or sets of instructions) 136. Furthermore, in some embodiments, memory 102 (FIG. 1) stores device/global internal state 157, as shown in FIG. 1. Device/global internal state 157 includes one or more of: active application state, indicating which applications, if any, are currently active; display state, indicating what applications, views or other information occupy various regions of touch screen display 112; sensor state, including information obtained from the device's various sensors and input control devices 116; and location information concerning the device's location and/or attitude.

Operating system 126 (e.g., Darwin, RTXC, LINUX, UNIX, OS X, iOS, WINDOWS, or an embedded operating system such as VxWorks) includes various software components and/or drivers for controlling and managing general system tasks (e.g., memory management, storage device control, power management, etc.) and facilitates communication between various hardware and software components.

Communication module 128 facilitates communication with other devices over one or more external ports 124 and also includes various software components for handling data received by RF circuitry 108 and/or external port 124. External port 124 (e.g., Universal Serial Bus (USB), FIREWIRE, etc.) is adapted for coupling directly to other devices or indirectly over a network (e.g., the Internet, wireless LAN, etc.). In some embodiments, the external port is a multi-pin (e.g., 30-pin) connector that is the same as, or similar to and/or compatible with, the 30-pin connector used on iPod^{®} (trademark of Apple Inc.) devices.

Contact/motion module 130 optionally detects contact with touch screen 112 (in conjunction with display controller 156) and other touch-sensitive devices (e.g., a touchpad or physical click wheel). Contact/motion module 130 includes various software components for performing various operations related to detection of contact, such as determining if contact has occurred (e.g., detecting a finger-down event), determining an intensity of the contact (e.g., the force or pressure of the contact or a substitute for the force or pressure of the contact), determining if there is movement of the contact and tracking the movement across the touch-sensitive surface (e.g., detecting one or more finger-dragging events), and determining if the contact has ceased (e.g., detecting a finger-up event or a break in contact). Contact/motion module 130 receives contact data from the touch-sensitive surface. Determining movement of the point of contact, which is represented by a series of contact data, optionally includes determining speed (magnitude), velocity (magnitude and direction), and/or an acceleration (a change in magnitude and/or direction) of the point of contact. These operations are, optionally, applied to single contacts (e.g., one finger contacts) or to multiple simultaneous contacts (e.g., "multitouch"/multiple finger contacts). In some embodiments, contact/motion module 130 and display controller 156 detect contact on a touchpad.

In some embodiments, contact/motion module 130 uses a set of one or more intensity thresholds to determine whether an operation has been performed by a user (e.g., to determine whether a user has "clicked" on an icon). In some embodiments, at least a subset of the intensity thresholds are determined in accordance with software parameters (e.g., the intensity thresholds are not determined by the activation thresholds of particular physical actuators and can be adjusted without changing the physical hardware of device 100). For example, a mouse "click" threshold of a trackpad or touch screen display can be set to any of a large range of predefined threshold values without changing the trackpad or touch screen display hardware. Additionally, in some implementations, a user of the device is provided with software settings for adjusting one or more of the set of intensity thresholds (e.g., by adjusting individual intensity thresholds and/or by adjusting a plurality of intensity thresholds at once with a system-level click "intensity" parameter).

Contact/motion module 130 optionally detects a gesture input by a user. Different gestures on the touch-sensitive surface have different contact patterns (e.g., different motions, timings, and/or intensities of detected contacts). Thus, a gesture is, optionally, detected by detecting a particular contact pattern. For example, detecting a finger tap gesture includes detecting a finger-down event followed by detecting a finger-up (liftoff) event at the same position (or substantially the same position) as the finger-down event (e.g., at the position of an icon). As another example, detecting a finger swipe gesture on the touch-sensitive surface includes detecting a finger-down event followed by detecting one or more finger-dragging events, and subsequently followed by detecting a finger-up (liftoff) event.

Graphics module 132 includes various known software components for rendering and displaying graphics on touch screen 112 or other display, including components for changing the visual impact (e.g., brightness, transparency, saturation, contrast, or other visual property) of graphics that are displayed. As used herein, the term "graphics" includes any object that can be displayed to a user, including, without limitation, text, web pages, icons (such as user-interface objects including soft keys), digital images, videos, animations, and the like.

In some embodiments, graphics module 132 stores data representing graphics to be used. Each graphic is, optionally, assigned a corresponding code. Graphics module 132 receives, from applications etc., one or more codes specifying graphics to be displayed along with, if necessary, coordinate data and other graphic property data, and then generates screen image data to output to display controller 156.

Haptic feedback module 133 includes various software components for generating instructions used by tactile output generator(s) 167 to produce tactile outputs at one or more locations on device 100 in response to user interactions with device 100.

Text input module 134, which is, optionally, a component of graphics module 132, provides soft keyboards for entering text in various applications (e.g., contacts application 137 and any other application that needs text input).

GPS module 135 determines the location of the device and provides this information for use in various applications (e.g., to a telephone for use in location-based dialing; to camera 143 as picture/video metadata; and to applications that provide location-based services such as weather widgets, local yellow page widgets, and map/navigation widgets).

Applications 136 optionally include the following modules (or sets of instructions), or a subset or superset thereof:
- Contacts application 137 (sometimes called an address book or contact list);
- Camera application 143 for still and/or video images;
- Image management application 144;
- Video and music player application 152;
- Notes application 154;
- Map notes application 154; and/or
- Online video application 155.

Examples of other applications 136 that are, optionally, stored in memory 102 include other word processing applications, other image editing applications, drawing applications, presentation applications, JAVA-enabled applications, encryption, digital rights management, voice recognition, and voice replication.

In conjunction with touch screen 112, display controller 156, contact/motion module 130, graphics module 132, and text input module 134, contacts application 137 are, optionally, used to manage an address book or contact list (e.g., stored in an application internal state of contacts application 137 in memory 102), including: adding name(s) to the address book; deleting name(s) from the address book; associating telephone number(s), e-mail address(es), physical address(es) or other information with a name; associating an image with a name; categorizing and sorting names; providing telephone numbers or e-mail addresses to initiate and/or facilitate communications by a telephone, a video conference application, an e-mail application, an or instant messaging (IM) application, and so forth.

In conjunction with RF circuitry 108, audio circuitry 110, speaker 111, microphone 113, touch screen 112, display controller 156, contact/motion module 130, graphics module 132, and text input module 134, telephone application are optionally, used to enter a sequence of characters corresponding to a telephone number, access one or more telephone numbers in contacts module 137, modify a telephone number that has been entered, dial a respective telephone number, conduct a conversation, and disconnect or hang up when the conversation is completed.

In conjunction with RF circuitry 108, audio circuitry 110, speaker 111, microphone 113, touch screen 112, display controller 156, optical sensor 164, optical sensor controller 158, contact/motion module 130, graphics module 132, text input module 134, contacts module 137, and telephone application, video conference application includes executable instructions to initiate, conduct, and terminate a video conference between a user and one or more other participants in accordance with user instructions.

In conjunction with RF circuitry 108, touch screen 112, display controller 156, contact/motion module 130, graphics module 132, and text input module 134, an instant messaging application can include executable instructions to enter a sequence of characters corresponding to an instant message, to modify previously entered characters, to transmit a respective instant message (For example, using a Short Message Service (SMS) or Multimedia Message Service (MMS) protocol for telephony-based instant messages or using XMPP, SIMPLE, or IMPS for Internet-based instant messages), to receive instant messages, and to view received instant messages. In some embodiments, transmitted and/or received instant messages optionally include graphics, photos, audio files, video files and/or other attachments as are supported in an MMS and/or an Enhanced Messaging Service (EMS). As used herein, "instant messaging" refers to both telephony-based messages (e.g., messages sent using SMS or MMS) and Internet-based messages (e.g., messages sent using XMPP, SIMPLE, or IMPS).

In conjunction with touch screen 112, display controller 156, optical sensor(s) 164, optical sensor controller 158, contact/motion module 130, graphics module 132, and image management application 144, camera application 143 includes executable instructions to capture still images or video (including a video stream) and store them into memory 102, modify characteristics of a still image or video, or delete a still image or video from memory 102.

In conjunction with touch screen 112, display controller 156, contact/motion module 130, graphics module 132, text input module 134, and camera application 143, image management application 144 includes executable instructions to arrange, modify (e.g., edit), or otherwise manipulate, label, delete, present (e.g., in a digital slide show or album), and store still and/or video images.

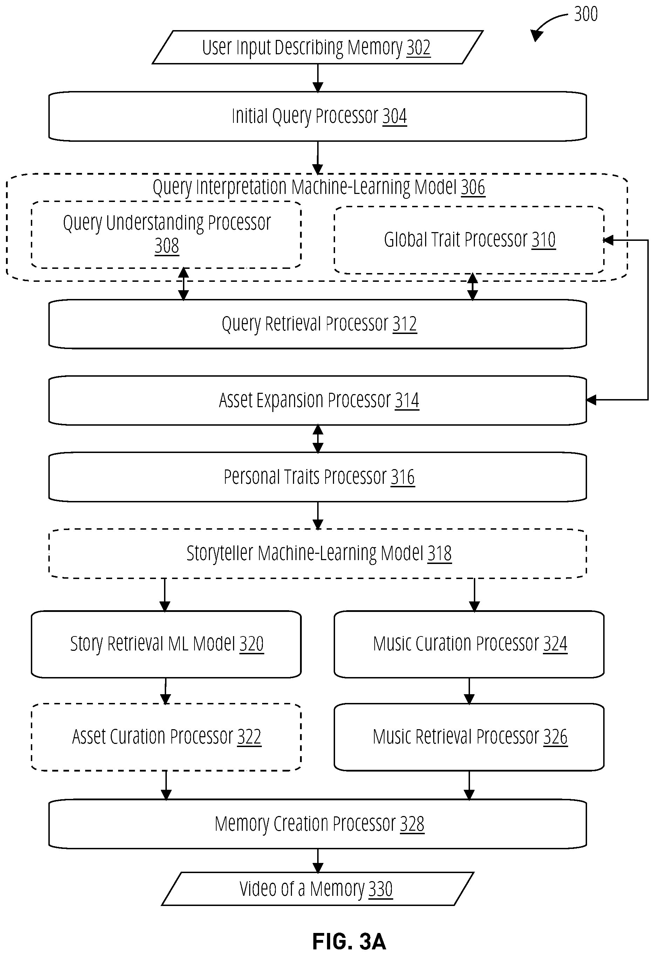

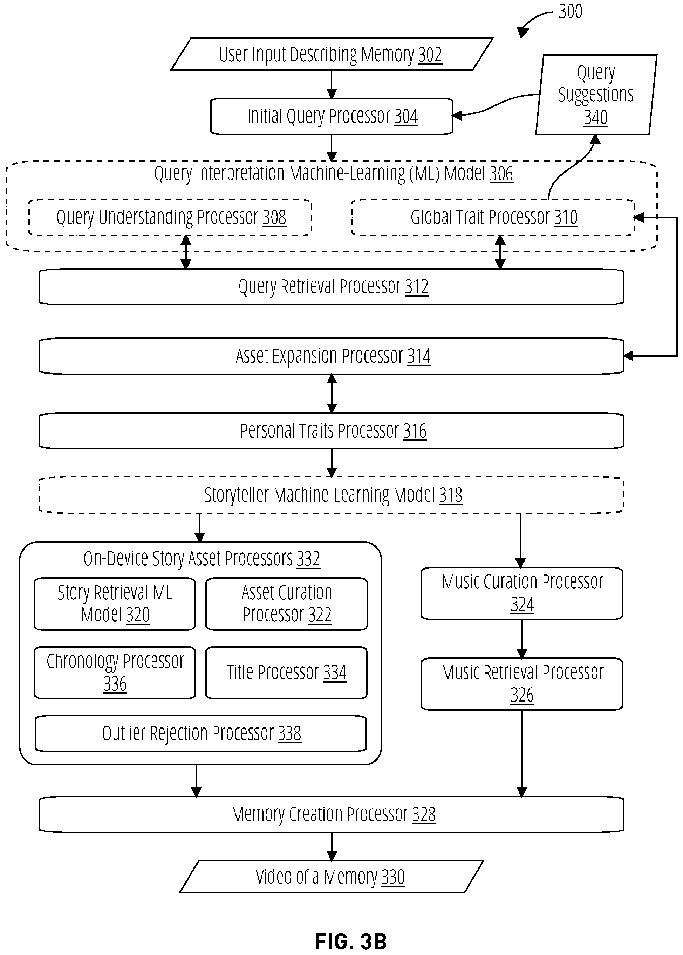

FIG. 3 shows a block diagram of a memory video application 300 that includes initial query processor 304, a query interpretation machine-learning model 306 (which includes a query understanding processor 308 and a global trait processor 310), a query retrieval processor 312, an asset expansion processor 314, a personal traits processor 316, a storyteller machine-learning model 318, a story retrieval machine-learning model 320, an asset curation processor 322, a music curation processor 324, a music retrieval processor 326, and a memory creation processor 328.

For example, the applications 136 in device 100 includes several applications, including image management application 144, which can include a photos application, and the photos application can include parts of memory video application 300. That is, memory video application 300 includes components and processors that can be included in image management application 144 or in a photos module that is included in applications 136.

Additionally, memory video application 300 can also include components and processors that are located remotely from device 100. According to certain non-limiting examples, the components outlined with dashed lines in FIG. 3 can be performed on a remote server or using cloud computing. According to certain non-limiting examples, tasks that require more memory and more computational resources can be offloaded to a server.

To protect the privacy and security of the information and media assets on the device 100, the components of memory video application 300 that are performed remotely can be performed with limited information that includes only descriptions of the media assets-not the media assets themselves-and does not include personally identifiable information (PII). For example, as discussed in more below, rather than sending the media assets to storyteller machine-learning model 318, descriptions of relevant features of the media assets (also referred to herein as "media items") can be generated by query retrieval processor 312 and 314, and these descriptions of the media assets can be sent to storyteller machine-learning model 318-not the media assets themselves. Further, the personal traits generated by personal traits processor 316 can be limited to features relevant to tasks performed by storyteller machine-learning model 318 without including PII.

In memory video application 300, user input describing a memory (i.e., user input 302) is used to generate a video of the memory (i.e., video 330). As used herein, the term "video" includes a movie, a moving picture, a series of still images displayed as a sequence in time, and/or a slide show with or without a soundtrack (e.g., musical accompaniment) and with or without annotations (e.g., titles and/or comments).

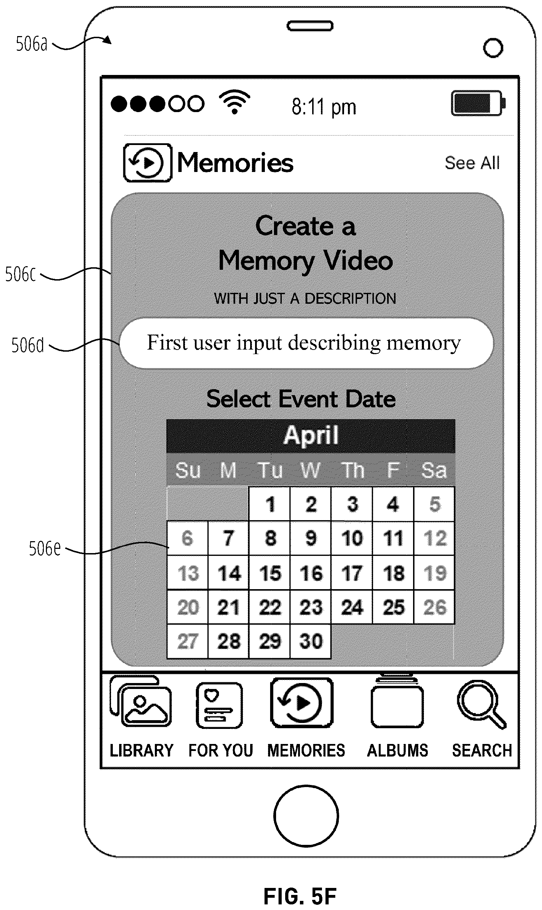

For example, a user can enter a natural language description of the user's memory (e.g., an event or occasion) into a text box. The text entered by the user is included in the user input 302. Additional information can also be included in user input 302. For example, the text entered by the user might include the phrase "my friends," and, to disambiguate who are "my friends," the user might be asked for additional user inputs indicating who is being referred to by the phrase "my friends" by selecting the friends from a list of possible friends that is derived from contacts application 137. Other types of ambiguity arising from user input 302 can include dates, locations, events, etc. For example, the text entered by the user might include a phrase referring to an event, such as "Cage the Elephant concert." Based on publicly available information, it may or may not be possible to determine a date and/or location for the specified event. When the date and/or location cannot be determined (e.g., there are multiple events that fall under the description), the user might be asked for additional information such as a date or location to disambiguate the referenced event. For example, FIG. 5F shows an example of asking the user to select a date to disambiguate the referenced event.

Memory video application 300 uses various processors and machine-learning models to determine the memory context from user input 302, find media assets (e.g., photos stored in association with image management application 144) that are relevant to the memory context (i.e., contextually relevant media), and, based on the determined memory context and the contextually relevant media, memory video application 300 curates and arranges the contextually relevant media into a story (e.g., a montage that is organized into chapters with titles, descriptive text, and accompanying music that has been curated to match a mood indicated by the memory context).

The memory context can include a time period, a location, a group of people, a setting, an atmosphere, the significance of the memory, an atmosphere, an intent of the video, and other contextual aspects that can inform the selection and arrangement of media assets to tell a story and/or evoke an emotion. For example, a user input of "make a movie to show at Bill's high school graduation party showing Bill growing from a baby to a high-school senior with Bill's successes along the way" might have a context of people (Bill), setting (school and events where Bill is successful), time (Bill's lifetime until he is a senior), an intent (to be shown at a graduation party), and a mood (growth and success). As another example, a user input of "make an upbeat movie about my skiing vacation at Lake Tahoe with family over winter break of 2023 accompanied by a song by an 80s hair band" might generate a memory context that includes: time (e.g., December 20-31, 2023), people (me and my family), mood (upbeat and energetic), setting (skiing and mountains), location (area near Lake Tahoe, California), etc.

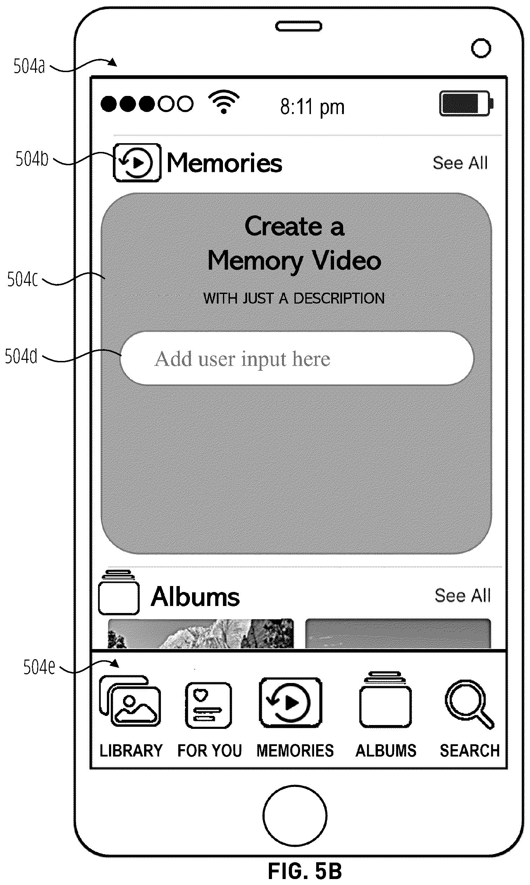

FIG. 5B illustrates an example of a user interface (e.g., user interface 504a) that can be used to receive user input 302 from which video 330 is generated. As used herein, a memory video can refer to contextually relevant media that has been gathered, curated, and arranged in a video format (e.g., a memory video). The user input 302 can be a plain language description of a context, an event, or a common attribute around which a memory can be formulated. Examples of user input 302 can include the following text strings: (i) "play me a memory of my kids playing soccer," (ii) "tell me stories about the spooky season with the kids," (ii) "make me an upbeat slideshow of my trips to Bangalore," (ii) "make me a movie about grandma and I cooking, using classical music," (ii) "play a video of Olivia at kindergarten, accompanied by a Taylor Swift song."

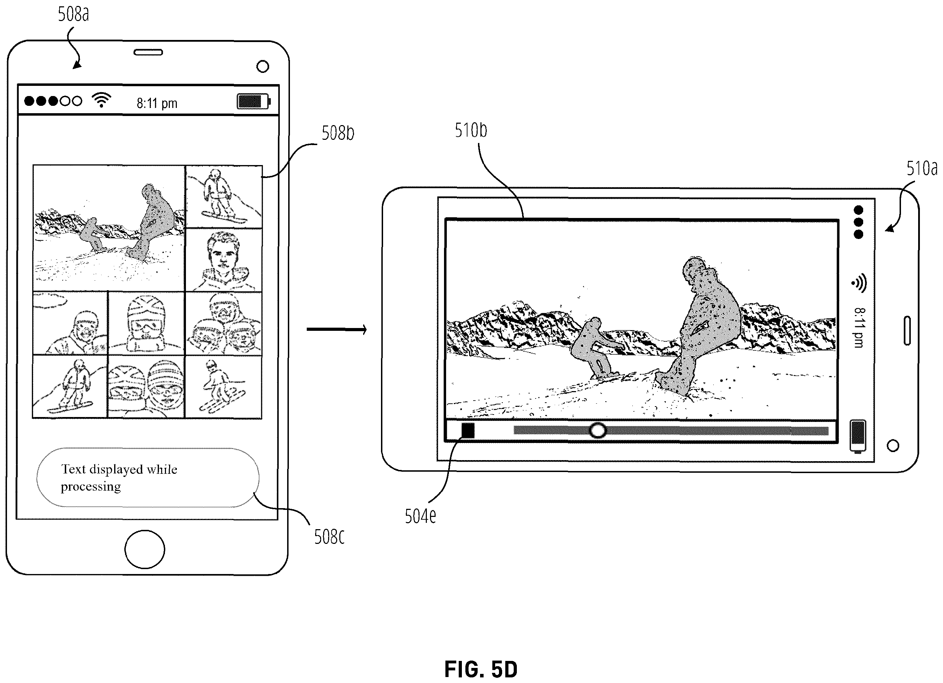

Initial query processor 304 receives user input 302 and generates an image or video to be displayed in a transition/loading screen while memory video application 300 generates video 330, which can take several seconds. The transition/loading screen provides the user with something to view while video 330 is being generated. Based on user input 302, initial query processor 304 provides a short, initial interpretation of user input 302 to generate initial search criteria, and initial query processor 304 searches the media assets and finds an initial set of media assets that most closely match the initial search criteria. The initial set of media assets is then used to generate a collage or a preliminary montage that is shown on a transition/loading screen while memory video application 300 generates video 330. For example, user interface 508a in FIG. 5D shows an example of a transition/loading screen in which a waiting display 508b is shown (e.g., a collage of images taken during a skiing vacation at Lake Tahoe, California). According to certain non-limiting examples, the waiting display 508b can include animation effects in which the relative sizes and/or positions of the images change within the collage.

For example, user input 302 can refer to a personal event, and initial query processor 304 can attempt to ground the event by determining a time frame (e.g., a date) or a location corresponding to the event.

Query interpretation machine-learning model 306 receives user input 302 and generates global traits that are then used by the query retrieval processor 312 as search criteria for a search of the media assets on device 100 to find a first subset of media items. According to certain non-limiting examples, query interpretation machine-learning model 306 can be a machine-learning model that is performed remotely from device 100 (e.g., by sending user input 302 to a server that includes query understanding processor 308 and global trait processor 310). Query interpretation machine-learning model 306 can include a large language model (LLM) that tokenizes the words and the location of words in user input 302 to generate global traits that can be used to search the media assets (e.g., photos) stored on device 100.

Query interpretation machine-learning model 306 can include query understanding processor 308 and global trait processor 310. Query understanding processor 308 can include an LLM, which has been trained using a general corpus of language training data and then modified using an adaptor. For example, the adaptor can use supervised fine-tuning to effectively modify the weights in a neural network to customize the LLM for a particular task. Here, the supervised fine-tuning can be performed using labeled data of user inputs associated with labels representing the features relevant for generating a memory video. Query understanding processor 308 can receive user input 302 as an input to the LLM, and, in response to user input 302, query understanding processor 308 can generate outputs, which are referred to a query tokens. The query tokens can represent information of the memory context, such as the who, what, when, where, why conveyed by user input 302, and the query tokens can also represent information of additional relevant terms for the memory context.

When ambiguities arise for the semantic meaning of user input 302, query interpretation machine-learning model 306 can send an instruction to request additional user input to disambiguate the semantic meaning of user input 302. In the example of user input 302 being "tell me stories about the spooky season with the kids," an ambiguity might arise as to who are "the kids" being referred to. For example, the user can be given a prompt describing the ambiguity and requesting clarification. The prompt can include a suggestion of possible alternative meanings for user input 302 and a text box for the user to input clarifying text. Alternatively, the prompt can provide several alternatives (e.g., a list of people from the user's contacts) from which the user can select to provide the clarification.

According to certain non-limiting examples, query interpretation machine-learning model 306 can include a functionality or ML adapter that supports the disambiguation and/or grounding of personal or public events referenced in user prompts by leveraging knowledge graph techniques. When a user inputs a prompt such as "my graduation day" or "Ed Sheeran concert," query interpretation machine-learning model 306, through a query understanding adapter (e.g., query understanding processor 308), determines whether the prompt refers to a personal or public event. If the event can be grounded using on-device knowledge-such as known birthdays, holidays, or ingested public events-query interpretation machine-learning model 306 automatically maps the event to a specific date or time range. In cases where the event cannot be confidently grounded or has multiple possible matches (e.g., multiple concerts), the model surfaces a user interface that presents suggested events or requests a date range for clarification.

Query interpretation machine-learning model 306 can access and/or reference a knowledge graph, such as a photos knowledge graph populated with public event data from concert discovery tools such as those available on APPLE MAPS or SHAZAM.COM, to support this grounding process. Once the event is accurately grounded to a date or time range-either automatically or with additional user input- query interpretation machine-learning model 306 can retrieve relevant media assets from the user's photo library that align temporally and contextually with the event. The use of both structured event data and interactive clarification reduces ambiguity and improves the relevance of selected images. This enables more accurate memory creation by ensuring that retrieved images closely reflect the user's intended reference. Query interpretation machine-learning model 306 can also dynamically expand its taxonomy of recognized personal event types through continuous updates to the query understanding adapter, without requiring a fixed set of event definitions.

According to certain non-limiting examples, query understanding processor 308 is an LLM adapter running on the server that takes user input 302 and infers the user's intent for the memory context. This inference can, e.g., be realized using the LLM adapter to derive from user input 302 the memory context of who, what, when, where, why, and additional relevant terms that the user expressed explicitly or implicitly in user input 302.

For example, when user input 302 is "make an upbeat movie about my skiing vacation at Lake Tahoe with family over winter break of 2023, accompanied by a song by an 80s hair band," the output from query understanding processor 308 might include: who - me and my family; what - skiing; when - late December 2023 to early January 2024; where - near Lake Tahoe, California, USA; why - for being upbeat, encouraging, or happy; and additional relevant terms "family vacation" "1980s music" "hair band" "glam rock" and "mood is upbeat or energetic." Query understanding processor 308 can also infer the atmosphere or mood from the combination and order of words in 302. For example, a memory about a family vacation when coupled with the terms "upbeat" and "accompanied by... 80s hair band" can imply that the memory context includes a mood or emotion to convey/evoke in the viewer feelings that are happy, energetic, and/or edgy. In contrast, a memory about a family vacation when coupled with the terms "joyful" and "accompanied by Barry Manilow" can imply that the memory context includes a mood or emotion that make the viewer nostalgic, peaceful, and content.

Query retrieval processor 312 can use the query tokens from query understanding processor 308 to search the media assets on device 100 to find a first subset of media items that most closely match user input 302. The process of query retrieval processor 312 searching for media assets that match user input 302 to retrieve the first subset of media items can be referred to as "query retrieval." That is, the query tokens can be executed against media assets (e.g., a photo library) on device 100. According to certain non-limiting examples, query retrieval processor 312 can be on device 100.

For example, the query retrieval performed by query retrieval processor 312 can be based on both metadata and embedding searches. A metadata search can include searching for photos on exact metadata.

For a metadata search, consider a case in which photos have been processed to identify faces, and the faces have been tagged and named by the user, such that the photos include facial annotations. When the query tokens include names of people associated with the memory, the names in the query tokens can be compared to the names in the face annotations to determine matches. Further, query retrieval processor 312 can infer relationships that can be used to map relationships to specific person identifiers in the photos. Other metadata that can be used to determine matches can include matching timestamps of when photos were taken to a time period that is identified in the query tokens. Additionally, when the photos are geotagged by the user, the geotag associated with the photos can be matched/correlated with a location that is identified in the query tokens.

In addition to the metadata search, query retrieval processor 312 can perform an embedding search to compare the query tokens with embeddings identifying objects, places, actions, and other features depicted in media, such as photos and videos. Embeddings enable text based searching of photos by semantic concepts, essentially allowing the user to describe what is in a photo. For instance, if a photo depicts a child jumping on the beach, the embeddings can describe these features such that the photo can be found by a text-based search using the key words/phrases of "my kid jumping on the beach" to describe what the photo is depicting. The embedding can be generated using an evidence based model that analyzes photos for visual embeddings (e.g., objects, places, actions, and other features depicted in a photo). These embeddings are provided such that a text-based query can be used to find photos with visual features matching the semantic concepts in the search query. For query retrieval processor 312, the search query is the query tokens.

The embedding can be identified in photos and videos using, e.g., a semantic segmentation machine-learning model and/or an image classifier machine-learning model. Examples of semantic segmentation machine-learning model include, but are not limited to, Fully Convolutional Network (FCN) models, U-Net models, SegNet models, a Pyramid Scene Parsing Network (PSPNet) models, DeepLab models, Mask R-CNN, GrabCut, and OpenCV, fast R-CNN models, faster R-CNN models, You Only Look Once (YOLO) models, and detection transformer (DETR) models such as Vision Transformer (ViT) models. Examples of image classifier machine-learning model include, but are not limited to, K-means models, Iterative Self-Organizing Data Analysis Technique (ISODATA) models, YOLO models, ResNet models, ViT models, a Contrastive Language-Image Pre-Training (CLIP) models, convolutional neural network (CNN) models, MobileNet models, and EfficientNet models.

Global trait processor 310 can use user input 302 and/or query tokens output by query understanding processor 308 to widen the memory context by extrapolating global traits for the memory context. In the above example of user input 302 being "make an upbeat movie about my skiing vacation at Lake Tahoe with family over winter break of 2023, accompanied by a song by an 80s hair band," which includes the where query token of "Lake Tahoe, California, USA," which is not just any location but a location that is associated with outdoor activities, beautiful views, boating on the lake, and skiing in the mountains. Global trait processor 310 can provide global traits by adding context that would inform the type of memory being conveyed. For example, global trait processor 310 can use user input 302 (and optionally the query tokens output from query understanding processor 308) to provide global context that would contribute to filling out the story for video 330. For example, a memory about Lake Tahoe would generally have a different atmosphere and mood than a memory about Las Vegas. Further, a memory about a family vacation can have a different atmosphere and mood than a memory about a road trip with a fraternity. Global trait processor 310 can include an LLM that has been trained to recognize the latent patterns in user inputs and provide these global traits to more accurately capture from user input 302 the user's intent for video 330.

Global trait processor 310 can be applied after query retrieval processor 312 has searched the media assets on device 100 to find a first subset of media items that most closely match user input 302. For example, the search can be based on the query tokens generated by query understanding processor 308.

When global trait processor 310 is applied after retrieving the first subset of media items, the inputs to global trait processor 310 can include both the information from user input 302 (e.g., the query tokens) and information from the first subset of media items (e.g., text descriptions of the first subset of media items). According to certain non-limiting examples, global trait processor 310 can be an adapter to an LLM, and global trait processor 310 can be located remotely from device 100 (e.g., on a server) Further, the inputs applied to the adapter of global trait processor 310 can be descriptions of the first subset of media items (e.g., embeddings of photos)-rather than the media items themselves- which are sent to the remote location to avoid the possibility of the media items being intercepted and/or compromised, thereby ensuring security and privacy of the media assets on device 100. Global trait processor 310 then uses the information from user input 302 and the information from the first subset of media items to determine global traits that are associated with user input 302 and the first subset of media items. For example, the global traits can be traits that are clustered near an intersection of the inferred context of user input 302 and the inferred content of the first subset of media items.

According to certain non-limiting examples, global trait processor 310 can use user input 302 to dynamically infer global traits from the first subset of media items that have been retrieved by query retrieval processor 312. Consider the above example of a memory about a family skiing vacation at Lake Tahoe. The first subset of media items can include, e.g., photos and videos of the user and the user's family (e.g., spouse and children) at Lake Tahoe during the specified period. Global trait processor 310 can infer from the first subset of media items additional context and information that complements the information in user input 302. Examples of such complementary information that is relevant to user input 302 might include who else is in the retrieved photos and videos (e.g., aunts, uncles, cousins, friends, etc.), locations that are shown (e.g., restaurants, hotels, tourist sites, etc.), and activities (e.g., downhill skiing, Nordic skiing, snowmobiling, dining, etc.), and other relevant description of the retrieved media assets.

Asset expansion processors 314 uses the first subset of media items and the global traits to search for additional media assets that are related to the first subset of media items. The additional media assets that are found are referred to as a second subset of media items. For example, the metadata of the first subset of media items can be analyzed and clustered to determine moments of the first subset of media items (e.g., related, common, or clustered features in the metadata of the first subset of media items). The media assets on device 100 can then be searched for matches to the moments of the first subset of media items.

For example, the times that photos are taken can be bunched together. A day spent skiing might include a bunch of photos that were taken during the morning while skiing and another bunch of photos that were taken at a restaurant during dinner. On that day, each of the two bunches of photos can be clustered into respective moments, for example. Some of the photos might match the query tokens and be retrieved in the first subset of media items, while other photos in these moments do not match the query tokens. Asset expansion processor 314 can review other photos in these moments that do not match the query tokens and analyze whether these other photos might also contribute to the memory video 330. If some of these other photos are determined likely to contribute to the memory video 330, they are included in the second subset of media items.

Personal traits processor 316 can analyze the combination of the first subset of media items and the second subset of media items, which are referred to as the combined subset of media items. Based on the analysis of the combined subset of media items, personal traits processor 316 generates personal traits. The personal traits can be generated, e.g., based on clusters that are determined for photos in a photo library based on visual similarities among the clustered photos. From these clusters of photos dominant themes of the clusters can be inferred. Whereas the global traits can be based, at least partly, on suggestions from an adapter LLM that is applied in query understanding processor 308, the personal traits generated by personal traits processor 316 are based entirely on the media assets on device 100.

Storyteller machine-learning model 318 can receive both the global traits and the personal traits and synthesize these traits into a story outline. The information used by storyteller machine-learning model 318 to generate the story outline can also include descriptions (e.g., information from the embeddings and metadata) of the combined subset of media items. Storyteller machine-learning model 318 can be an adapter to an LLM, and the adapter is located remotely, e.g., on a server. The adapter can be trained using supervised finetuning on training data that include story outlines associated with global traits and personal traits that are generated as described above.

According to certain non-limiting examples, the story outline generated from storyteller machine-learning model 318 includes a story title, chapters, and chapter titles. For example, the story can have five chapters, and each of the chapters has a respective theme. The chapters can be arranged chronologically or thematically. Each chapter can be arranged as a series of shots, wherein a shot can be a text description of a still image in a montage or a single take in a moving picture/video. For example, like a storyboard of a video includes panels illustrating shots, the chapters in the story outline are text descriptions of shots for a video. The chapter themes and the shots in the story outline can be based on natural language processing of descriptions of the combined subset of media items. The descriptions of the combined subset of media items can be based on embeddings of the combined subset of media items.

Story retrieval machine-learning model 320 compares the shot descriptions from the story outline to information of the respective media items in the combined subset of media items to determine matches. For example, story retrieval machine-learning model 320 can use a shot description for an embedding search of the combined subset of media items to find the k best matches, wherein k is a predefined positive integer (e.g., five).

Asset curation processor 322 selects, for respective chapters and/or shots in the story outline, the best photo from the k best matches returned by story retrieval machine-learning model 320. According to certain non-limiting examples, asset curation processor 322 receives as input descriptions of respective media assets (e.g., the k best matches for a given chapter and/or shot) and asset curation processor 322 receives a description of the chapter and/or shot from the story outline, and asset curation processor 322 returns and identifier/label for the best media item for the given chapter and/or shot.

According to certain non-limiting examples, asset curation processor 322 can be a machine learning model. For example, asset curation processor 322 can be an adapter to an LLM that is finetuned using supervised finetuning.

Music curation processor 324 selects music options that match a mood or atmosphere that corresponds to the global traits. Music retrieval processor 326 then retrieves music that corresponds to the music options.

Memory creation processor 328 generates video 330 by combining the retrieved music and the media items output from the asset curation processor 322 in accordance with the story outline and superimposes text (e.g., the story title and the chapter titles) on respective media items in the video.

FIG. 3B shows a block diagram of a memory video system 300 that, in addition to the components shown in FIG. 3A, includes title processor 334, chronology processor 336, and outlier rejection processor 338. On-device story asset processors 332 include various components that refine the story outline and collect, curate, organize, and annotate the media assets based on the story outline provided by storyteller machine-learning model 318. Story retrieval ML model 320 and asset curation processor 322 are described above.

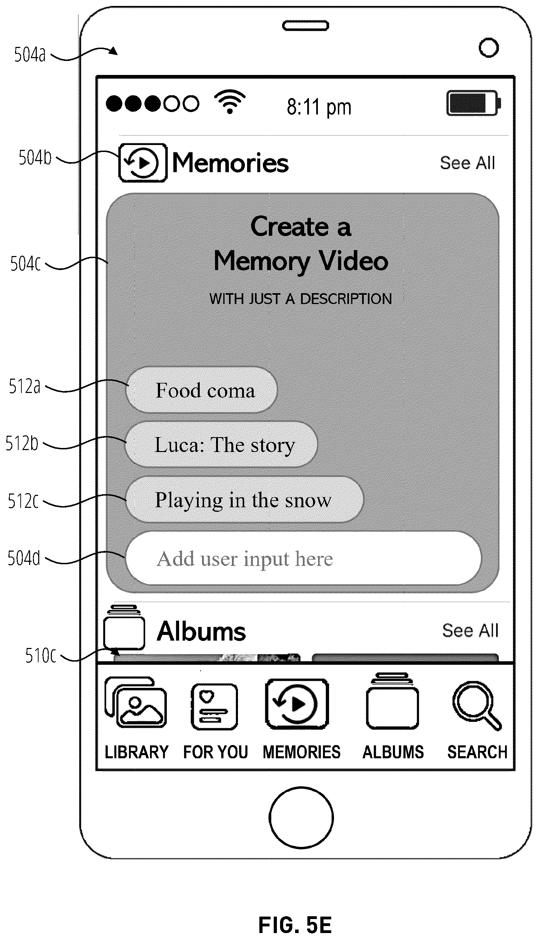

FIG. 3B also shows global trait processor 310 generating query suggestions 340 being generated and provided to initial query processor 304. Rather than having the user generate user input 302, the user can select a prewritten prompt from query suggestions 340, as described below when discussing FIG. 5E. For example, attributes associated with the prewritten prompts can be compared to the global traits provided by global trait processor 310, and based on this comparison one or more of the prewritten prompts can be selected as good candidates for generating high-quality memory videos. The selected prewritten prompts can then be presented in a user interface (UI) as options to be used as the prompt for user input 302.

According to certain non-limiting examples, query interpretation machine-learning model 306 can use machine learning to suggest prewritten prompts-such as whimsical or contextual prompts-based on how well they align with the media assets on device 100 (e.g., a user's photo library). These prewritten prompts can be tagged with specific attributes or traits (e.g., themes like "sunset," "beach," or "birthday celebration"). In parallel, a global personal traits processor 316 can analyze the media assets on device 100 to extract prominent features (e.g., global traits).

The system then compares the traits associated with each prewritten prompt to the global traits. If a strong match is identified, the corresponding prompt is flagged as a good candidate and is surfaced in the user interface as a suggested prewritten prompt for generating a memory video. Whimsical prompts can be more general and designed to be delightful across a wide variety of libraries (e.g., "Sunsets and Smiles"), while contextual prompts are tied to upcoming holidays, seasons, or personal events like birthdays and anniversaries (e.g., "Celebrating Luca" if Luca's birthday is near). An offline validation process can ensure that these prompts are only shown if there is enough relevant content in the media assets on device 100 to create a high-quality memory.

Non-limiting examples of whimsical prompts can be, for example, (1) "Born to be wild"; (2) "On an Adventure"; (3) "A World of Imagination"; (4) "Having a Ball"; (5) "Islands in the sand"; (6) "Nighttime Magic"; (7) "Adventure is out there"; (8) "Life in Full Color"; (9) "Just Desserts"; (10) "Feel Good Memories"; (11) "Living my best life"; and (12) "Sunset Chasers."

Non-limiting examples of contextual prompts can be, for example, (1) "Exploring the world together" for Valentine's Day; (2) "World's Best Dad" for Father's Day; (3) "Nature's symphony" for Earth Day; (4) "Break out the sunglasses" for summer; (5) "Spring has sprung" for spring; (6) "Celebrating Luca" for a birthday, and (7) "Cheers to love" for an anniversary.

According to certain non-limiting examples, title processor 334, is an on-device adapter (e.g., a Low-Rank Adaptation (LoRA) adapter) to a language model. Title processor 334 generates improved chapter titles for the story outline generated by storyteller machine-learning model 318.

For example, the original story outline from storyteller machine-learning model 318 can include a series of chapters, each with a chapter title. Story retrieval ML model 320 selects sets of images (also referred to as photos, shots, or media assets) from the media assets on device 100 that correspond to the respective chapters. The images are selected by story retrieval ML model 320 based on the chapter descriptions in the story outline from storyteller machine-learning model 318. Once these images are selected, title processor 334 uses the additional information of the selected images (e.g., metadata, image embeddings, or image descriptions) together with the original story outline to select more appropriate chapter titles. The information of the selected images may include image metadata (such as timestamps and geotags), image embeddings, and high-level content descriptions, such as the presence of specific people or objects.

Using this combination of textual and visual context, the title processor 334 can rewrite the chapter titles to more accurately and meaningfully reflect the actual imagery that will be presented in the story. For example, if a chapter originally titled "Beach Day" is matched with images taken at a luau, the model may retitle the chapter as "Evening at the Luau" to better reflect the content. Title processor 334 can also account for global traits found across the selected assets, such as people featured repeatedly or common locations, to improve thematic cohesion. By anchoring the titles to the actual images rather than relying solely on the initial textual outline, title processor 334 can provide better chapter titles, resulting in more engaging and cohesive video memory.

According to certain non-limiting examples, chronology processor 336 reframes a story outline from a montage format to a chronological format, when the chronological format is determined to be more appropriate based on the available media assets. For example, chronology processor 336 can receive a story outline that is formatted as a montage, which is subdivided into chapters with chapter titles. Based on the media assets on device 100, chronology processor 336 can determine that a chronological format, rather than the montage format, would provide a better memory video for the story outline provided by storyteller machine-learning model 318.

According to certain non-limiting examples, storyteller machine-learning model 318 provides a story outline that is formatted as a montage, where content is grouped into thematic chapters, each with a title and associated visual elements. This montage format is often used to create narrative groupings based on logical or emotional themes rather than temporal sequence. However, not all stories are best told in this style, especially when the underlying visual content-such as a user's photo library-suggests a more natural progression over time. Chronology processor 336 can perform an inference step to determine whether the montage format or a chronological format is better suited to telling the story given the available images. This inference step can account for both the story outline provided by storyteller machine-learning model 318 and the characteristics of the media assets on device 100.

Chronology processor 336 can evaluate whether the montage structure of the outline is optimal for the media assets on device 100, or whether a chronological structure is more appropriate given the media assets on device 100. For example, chronology processor 336 can analyze both the visual content and the structure of the outline to infer whether a chronological narrative might better align with the available media assets. When the chronological narrative is determined to be preferable, chronology processor 336 reformats the montage-style outline into a chronological-style outline and selects the media assets that are most relevant to the chronological story outline. According to certain non-limiting examples, chronology processor 336 can arrange the media assets according to the new chronological outline. To ensure the resulting story is well-balanced, chronology processor 336 can take into account key distribution factors such as time, location, and subject matter (e.g., people or pets), ensuring that selected images are not overly concentrated in a single timeframe or setting. This enables the generation of a visually and narratively compelling video memory or slideshow that is more reflective of the actual flow of events.

According to certain non-limiting examples, outlier rejection processor 338 can be a machine learning (ML) model that performs outlier detection. For example, outlier rejection processor 338 can be implemented as an intelligent adapter that receives the images (e.g., shots, photos, or other media assets) selected by asset curation processor 322. Outlier rejection processor 338 reviews these images to identify and remove outlier images that do not align with the intended theme or narrative of a story-based slideshow. For example, outlier rejection processor 338 can analyze the visual and contextual coherence of each image relative to the overall set. Outliers are determined as images that are semantically or thematically inconsistent with the prompt or the other selected images. For example, if a user creates a memory titled "Spooky Season Over the Years" and the selected images mostly reflect Halloween celebrations, an unrelated photo-such as one showing someone cleaning a roof-would be considered an outlier.

Outlier rejection processor 338 can evaluate images using a combination of metadata (such as dates and locations), visual content embeddings, and high-level feature analysis to determine relevance. When an image is flagged as inconsistent, the model filters it out before the final memory video (e.g., slideshow) is generated. This process ensures that the slideshow maintains a focused and coherent narrative experience. The outlier detection adapter operates as part of a broader memory creation pipeline, which integrates both server-side and on-device intelligence for efficient and context-aware curation.

The processors and ML models in memory video application 300 can be implemented as adapters to a ML language model that are implemented on device 100 or can be performed on a remote server or using cloud computing. According to certain non-limiting examples, the processors and ML models can be adapters or distillations of Apple Foundation Model (AFM) models. The AFM models can include AFM-on-device and AFM-server, and these can be tailored for efficiency and versatility, supporting a wide range of user-centric tasks such as text refinement, notification summarization, and visual content creation.

For example, AFM models can include large language models developed to support AI functionalities across various operating systems, including iOS, iPadOS, and macOS. Architecturally, the AFM models can be based on the Transformer framework and include a range of enhancements aimed at improving training stability, memory efficiency, and long-sequence understanding. These enhancements include, by way of non-limiting example, the use of pre-normalization with RMSNorm, grouped-query attention (GQA), SwiGLU activations, and rotary positional embeddings (RoPE). The AFM models can include FM-on-device, which is optimized for mobile and edge computing scenarios, and AFM-server, which is designed for more compute-intensive server-side tasks. A person of ordinary skill in the art will recognize that the described components can be substituted or modified to accommodate alternative model configurations or performance requirements.

The development pipeline for AFM can include several stages including data collection, quality filtering, core training, and post-training alignment. Post-training, the models can be fine-tuned using supervised learning and reinforcement learning from human feedback (RLHF), employing techniques such as Iterative Training with Expert Critique (iTeC) and Mirror Descent Leave-One-Out (MDLOO) to align model behavior with human expectations. For deployment, additional techniques can be used to adapt the models for specific tasks, such as runtime-swappable adapters, model pruning, quantization, and early exit strategies to enhance efficiency. For example, prompt interpretation tasks may leverage attention-based sequence-to-sequence models, while image generation may utilize generative adversarial networks (GANs) or variational autoencoders (VAEs), though alternate implementations may be used depending on application context.

Implementations within the scope of the present disclosure can be partially or entirely realized using a tangible computer-readable storage medium (or multiple tangible computer-readable storage media of one or more types) encoding one or more computer-readable instructions. It should be recognized that computer-executable instructions can be organized in any format, including applications, widgets, processes, software, software modules and/or components.

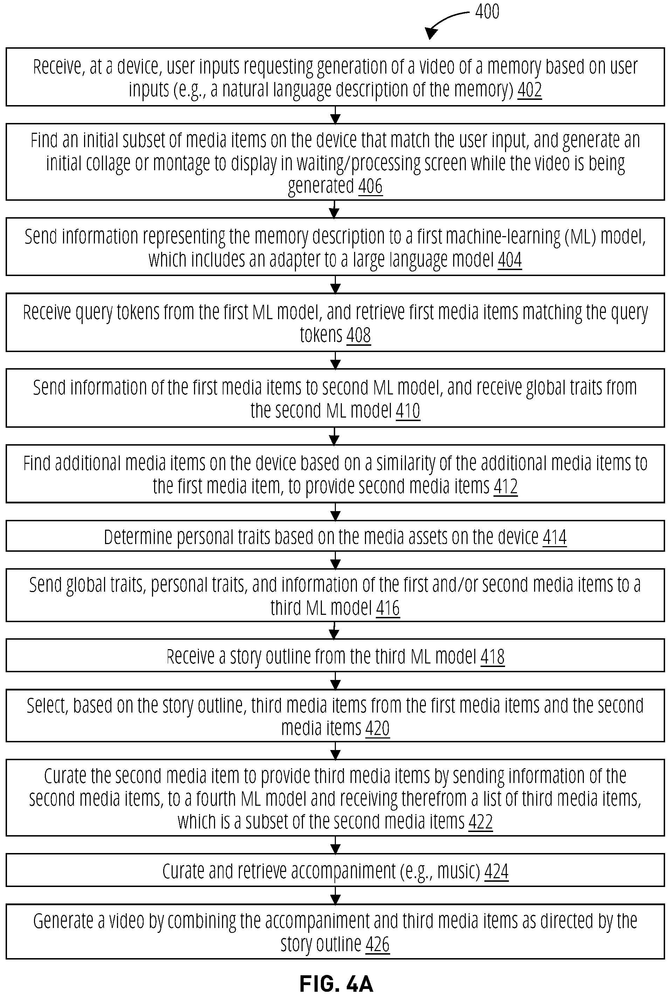

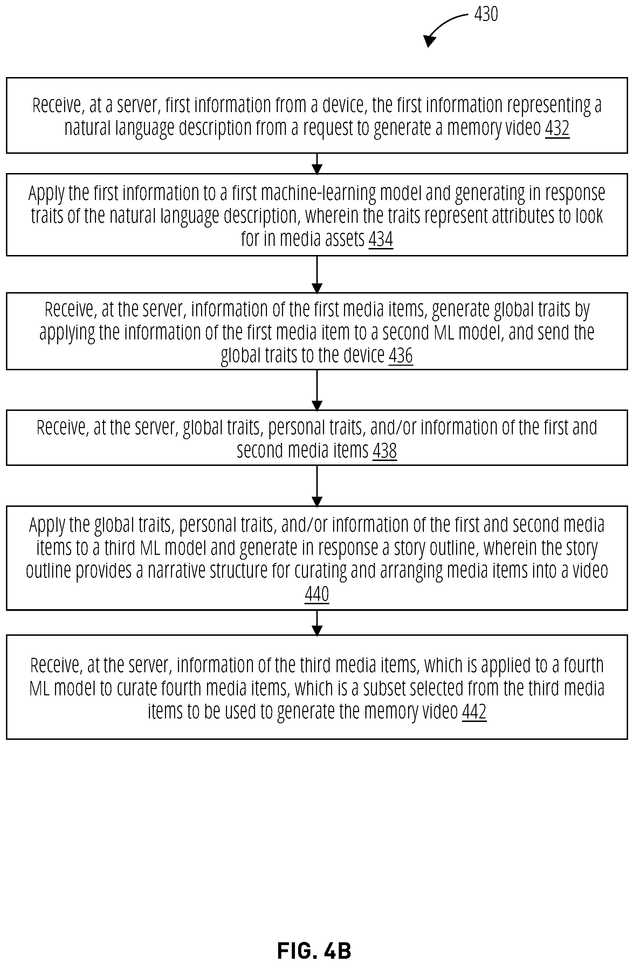

Implementations within the scope of the present disclosure include a computer-readable storage medium that encodes instructions organized as an application (e.g., memory video application 300) that, when executed by one or more processing units, control an electronic device (e.g., device 100) to perform the method of FIG. 4A, the method of FIG. 4B, and/or one or more other processes and/or methods described herein.

It should be recognized that memory video application 300 (shown in FiG. 3) can be any suitable type of application, including, for example, one or more of: a browser application, an application that functions as an execution environment for plug-ins, widgets or other applications, a fitness application, a health application, a digital payments application, a media application, a social network application, a messaging application, and/or a maps application. In some embodiments, memory video application 300 is an application that is pre-installed on device 100 at purchase (e.g., a first party application). In other embodiments, memory video application 300 is an application that is provided to device 100 via an operating system update file (e.g., a first party application or a second party application). In other embodiments, memory video application 300 is an application that is provided via an application store. In some embodiments, the application store can be an application store that is pre-installed on device 100 at purchase (e.g., a first party application store). In other embodiments, the application store is a third-party application store (e.g., an application store that is provided by another application store, downloaded via a network, and/or read from a storage device).

Referring to FIG. 4A, memory video application 300 obtains information (e.g., STEP 402). In some embodiments, at STEP 402, information is obtained from at least one hardware component of the device 100. In some embodiments, at STEP 402, information is obtained from at least one software module (e.g., set of instructions) of the device 100. In some embodiments, at STEP 402, information is obtained from at least one hardware component external to the device 100 (e.g., a peripheral device, an accessory device, a server, etc.). In some embodiments, the information obtained at STEP 402 includes positional information, time information, notification information, user information, environment information, electronic device state information, weather information, media information, historical information, event information, hardware information, and/or motion information. In some embodiments, in response to and/or after obtaining the information at STEP 402, memory video application 300 provides the information to a server (e.g., steps 404, 410, and 416). In some embodiments, in response to providing the information to the server, memory video application 300 receives from the server results generated from the provided information (e.g., steps 408, 410, and 418).

FIG. 4A illustrates an example method 400 implemented on a device 100 to generate video 330 from user input 302. Although the example method 400 depicts a particular sequence of operations, the sequence may be altered without departing from the scope of the present disclosure. For example, some of the operations depicted may be performed in parallel or in a different sequence that does not materially affect the function of method 400. In other examples, different components of an example device or system that implements method 400 may perform functions at substantially the same time or in a specific sequence.

According to some examples, in step dash, the method includes receiving, at a device, user inputs requesting a generation of a video. For example, video 330 can be generated from user input 302, and user input 302 can be a user's natural language description of the memory.

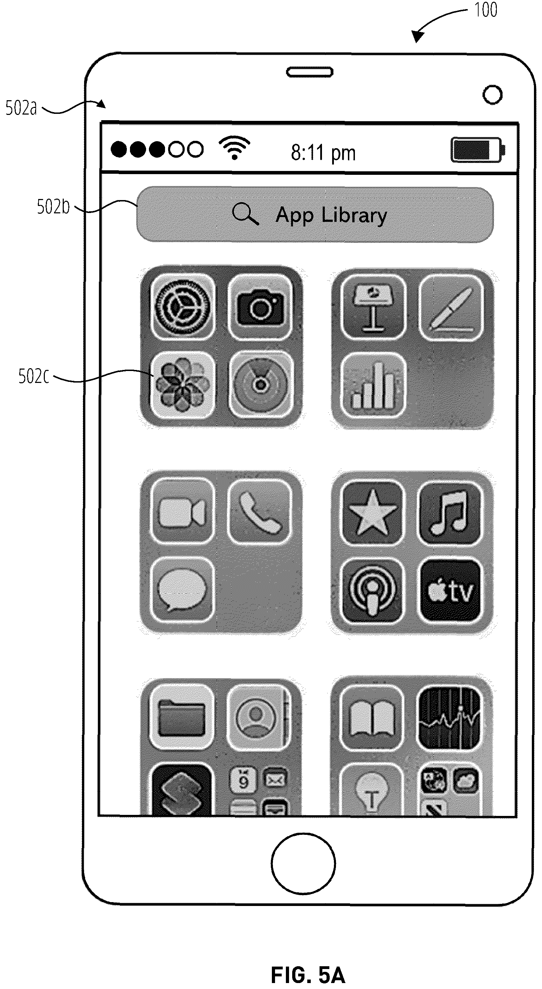

FIG. 5A illustrates an example of device 100 displaying a home screen user interface (i.e., user interface 502a) that includes, among other things, application search box 502b and photos icon 502c. A user can select a photos application by touching the touchscreen touch screen 112 of device 100 in proximity top photos icon 502c.

Responsive to the user selecting photos application, device 100 can transition to photos application user interface (e.g., user interface 504a), which is illustrated in FIG. 5B. User interface 504a can include memories section 504b and short cut menu 504e. Short cut menu 504e allows a user to quickly move between the library section, for you section, memories section 504b, albums section, and search section of the photos application. memory video application 300 can be accessed in memories section 504b. Memories section 504b can include prompt 504c and text entry box 504d. Prompt 504c provides instructions to the user regarding how to request a memory video by entering text describing the memory into text entry box 504d. When a user selects text entry box 504d, e.g., by touching touch screen 112 in proximity to 504d, device 100 transitions from user interface 504a to user interface 506a.

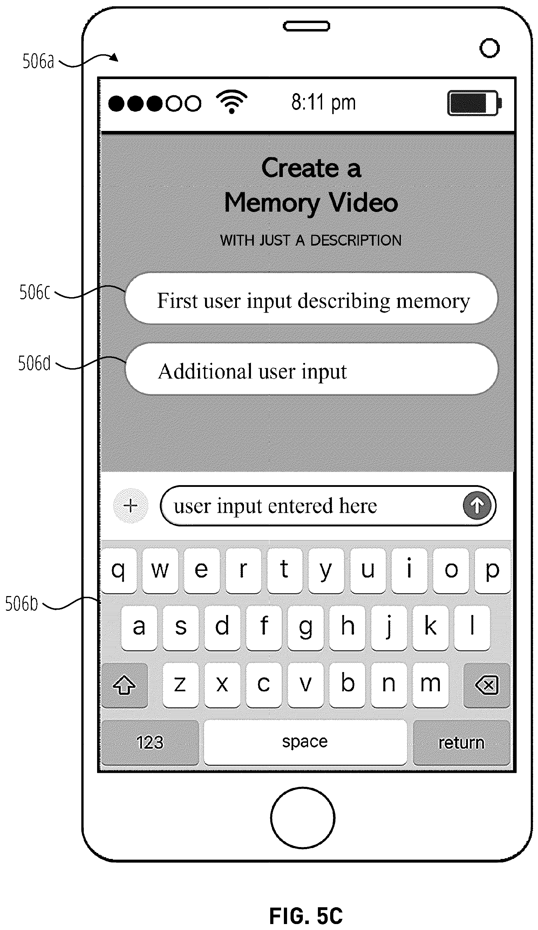

User interface 506a, which is illustrated in FIG. 5C, allows the user to enter text describing the memory using keyboard 506b. The user enters the text using 506b, and the text shows up in the text entry field that shows the text "user input entered here." When the user touches the up arrow next to the text entry field, the text shows up in one or more text display bubbles, such as text display bubble 506c and text display bubble 506d. The text that is shown in the text display bubble(s) is user input 302 which is used for generating video 330.

As discussed above, in cases where the event cannot be confidently grounded or has multiple possible matches (e.g., multiple concerts), a user interface can be presented in which the user can provide additional inputs to resolve the ambiguity arising from the multiple possible matches. Text display bubble 506d in user interface 506a can be used to receive the additional inputs. User interface 506a can also include guidance regarding what additional information is requested to resolve the ambiguity. For example, user interface 506a can include suggested text (e.g., names or locations) that can be used to resolve the ambiguity.

FIG. 5E shows an alternative implementation to FIG. 5B. User interface 504a in FIG. 5E can be the same as user interface 504a in FIG. 5B except for the addition of suggestions (e.g. suggestion 512a, suggestion 512b, and suggestion 512c). Selecting one of the suggestions causes text entry box 504d to be populated with the selected suggestion. The suggestions can be prompts that are predicted to provide a high-quality memory video for the user. The suggestions can provide the user with a convenient way of generating a memory video without requiring the user to think of and write a prompt in memories section 504b.

According to certain non-limiting examples, the suggestions can be selected from a set of prewritten prompts that have been demonstrated to provide high-quality memory videos. Some prompts in the set of prewritten prompts can be more appropriate for the media assets on the device 100 of a first user, whereas other prompts in the set of prewritten prompts can be more appropriate for the media assets on the device 100 of a second user. To determine which prompts of the set of prewritten prompts are best for a given user, attributes associated with a prompt can be compared to attributes of the media assets of the given user. For example, this comparison can be used to generate a matching score between the prompt and the media assets of the given user, and the set of prewritten prompts can be filtered using the scores of the respective prompts to determine a subset of the prewritten prompts that are the best candidates for the given user. According to certain non-limiting examples, only prewritten prompts having a score greater than a predefined threshold are provided as suggestions to the user. According to certain non-limiting examples, the score can be generated by comparing the attributes associated with a prompt to the global traits provided by global trait processor 310.

FIG. 5F provides an example of seeking additional input regarding an event date corresponding to the memory. Similar to FIG. 5C, user interface 506a in FIG. 5F allows the user to provide additional information that can be used for generating the memory video. The user selects a date using calendar UI element 506e. The selected date is incorporated in user input 302, which is used for generating video 330.

As discussed above, in cases where the event cannot be confidently grounded or has multiple possible matches (e.g., multiple concerts), a user interface can be presented in which the user can provide additional inputs to resolve the ambiguity arising from the multiple possible matches. calendar UI element 506e in user interface 506a can be used to receive the additional inputs. User interface 506a can also include guidance regarding what additional information is requested to resolve the ambiguity. For example, user interface 506a can include suggested dates for an event that is mentioned in text display bubble 506d.

Returning to FIG. 4A, according to some examples, in step 404, the method includes finding an initial subset of media items on the device that match user input 302. Based on the initial subset of media items, the method then generates an initial collage or montage of the initial subset of media items, and the initial collage or montage is displayed in a user interface on device 100 while the video is being generated. For example, step 404 can be performed by initial query processor 304 using the techniques and processes described with reference to initial query processor 304.

FIG. 5D illustrates a user interface 508a that displays a collage of the initial subset of media items in a waiting display 508b. User interface 508a can also include a text field 508c that conveys information to the user while the video is being generated. The collage of the initial subset of media items that is displayed in the waiting display 508b can entertain and occupy the user's attention while the user is waiting for the video to be generated. Once the video has been generated, device 100 can transition from user interface 508a to user interface 510a. User interface 510a can include affordances menu 510b and video 510c. For example, affordances menu 510b can include a play/pause affordance and a seek bar (e.g., to scrub to different times in the video). User interface 510a depicts the video 510c in a landscape orientation, however, in some embodiments user interface 510a can be displayed in portrait orientation. In some embodiments, the orientation of the video is dependent on an orientation of device 100 (e.g., whether the device is currently positioned vertically or horizontally).

According to some examples, in step 406, the method includes sending first information representing the natural language description to a first machine-learning (ML) model. For example, device 100 can send user input 302 to a server that includes query interpretation machine-learning model 306, and query interpretation machine-learning model 306 can include query understanding processor 308, which has an adapter to a machine-learning model for generating query tokens.

According to some examples, in step 408, the method includes receiving query tokens from the first ML model and retrieving first media items matching the query tokens. For example, the query tokens can be generated by query understanding processor 308 and retrieving first media items can be performed by query retrieval processor 312 using the techniques and processes described with reference to query retrieval processor 312.

According to some examples, in step 410, the method includes sending information of the first media items to a second ML model, and receiving global traits from the second ML model. For example, the global traits can be generated by global trait processor 310 using the techniques and processes described with reference thereto.

According to some examples, in step 412, the method includes finding additional media items on the device based on a similarity of the additional media items to the first media item, to provide second media items. Step 412 can be performed by asset expansion processor 314 using the techniques and processes described with reference to asset expansion processor 314.

According to some examples, in step 414, the method includes determining personal traits based on the media assets on the device. For example, the personal traits can be text-based descriptions of the first media items and the second media items. Step 416 can be performed by personal traits processor 316 using the techniques and processes described with reference to personal traits processor 316.

According to some examples, in step 416, the method includes sending global traits, personal traits, and information of the first and/or second media items to a third ML model (e.g., to storyteller machine-learning model 318).

According to some examples, in step 418, the method includes receiving a story outline from the third ML model. For example, the story outline can be generated by applying the global traits, personal traits, and/or information of the first and second media items to storyteller machine-learning model 318 using the techniques and processes described with reference to storyteller machine-learning model 318.

According to some examples, in step 420, the method includes selecting, based on the story outline, third media items from the first media items and the second media items. For example, step 420 can be performed by story retrieval machine-learning model 320 using the techniques and processes described with reference to story retrieval machine-learning model 320.

According to some examples, in step 422, the method includes curating the second media item to provide third media items. The second media items are curated by sending information of the second media items to a fourth ML model and receiving from the fourth ML model a list of a subset of the second media items, and this list is the third media items, which are used to generate the video 330. For example, step 422 can be performed by asset curation processor 322 using the techniques and processes described with reference to asset curation processor 322.

According to some examples, in step 424, the method includes curating and retrieving accompaniment (e.g., music). For example, step 424 can be performed by music curation processor 324 and music retrieval processor 326 using the techniques and processes described with reference to music curation processor 324 and music retrieval processor 326.

According to some examples, in step 426, the method includes generating a video 330 by combining the accompaniment/music and third media items as directed by the story outline.

and generate a video by combining the accompaniment and fourth media items as directed by the story outline the third media items to generate a video based on the story outline. For example, step 424 can be performed by memory creation processor 328 using the techniques and processes described with reference to memory creation processor 328.

FIG. 4B illustrates an example method 400 implemented at a server to generate video 330 from user input 302. Although the example method 400 depicts a particular sequence of operations, the sequence may be altered without departing from the scope of the present disclosure. For example, some of the operations depicted may be performed in parallel or in a different sequence that does not materially affect the function of the method 400. In other examples, different components of an example device or system that implements the method 400 may perform functions at substantially the same time or in a specific sequence.

According to some examples, in step 432, the method includes receiving, at a server, first information from a device. For example, the first information can be a natural language description from a request to generate a video. Step 432 can be performed by query understanding processor 308.

According to some examples, in step 434, the method includes applying the first information to a first machine-learning (ML) model and generating in response global traits of the natural language description. The traits global traits can represent attributes to look for in media assets at step 434. Step 434 can be performed by query understanding processor 308 using the techniques and processes described with reference to query understanding processor 308.

According to certain non-limiting examples, query understanding processor 308 can be an adapter to an LLM that is finetuned using supervised finetuning to provide query tokens to be used in finding media assets corresponding to the user input 302. For example, the adapter implementing query understanding processor 308 can receive a prompt that is generated based on user input 302, and, in response to the prompt, query understanding processor 308 generates a completion containing the query tokens.

According to some examples, in step 436, the method includes receiving, at the server, information of the first media items, and generating global traits by applying the information of the first media item to a second ML model. Step 436 can further include sending, from the server, the global traits to the device. Step 434 can be performed by global trait processor 310 using the techniques and processes described with reference to global trait processor 310.

According to certain non-limiting examples, global trait processor 310 can be an adapter to an LLM that is finetuned using supervised finetuning to provide global traits to be used in expanding the media assets from the first subset of media items to include a second subset of media items based on user input 302 and descriptions of the media assets on device 100. For example, the adapter implementing global trait processor 310 can receive a prompt that is generated based on user input 302 and embeddings of the media assets on device 100. In response to the prompt, global trait processor 310 generates a completion containing the global traits.

According to some examples, in step 438, the method includes receiving, at the server, global traits, personal traits and/or information of the first and second media items.

According to some examples, in step 440, the method includes applying the global traits, personal traits, and/or information of the first and second media items to a third ML model and generating in response a story outline, wherein the story outline provides a narrative structure for curating and arranging media items into a video at step 440. Step 434 can be performed by storyteller machine-learning model 318 using the techniques and processes described with reference to storyteller machine-learning model 318.

According to certain non-limiting examples, storyteller machine-learning model 318 can be an adapter to an LLM that is finetuned using supervised finetuning to provide a story outline based on a prompt generated from user input 302, query tokens, global traits, and/or personal traits. In response to the prompt, storyteller machine-learning model 318 generates a completion containing the story outline.

According to some examples, in step 440, the method includes receiving, at the server, information describing the third media items, which is applied to a fourth ML model to curate fourth media items from the fourth media items. For example, the fourth media items are selected to generate the memory video. Further, the fourth media items are a subset of the third media items that are selected based on matching shots in the story outline to the information describing the third media items. Step 434 can be performed by asset curation processor 322 using the techniques and processes described with reference to asset curation processor 322.

According to certain non-limiting examples, asset curation processor 322 can be an adapter to an LLM that is finetuned using supervised finetuning to provide a list of media assets to be used in the respective chapters and/or shots of the story outline. For example, the adapter implementing asset curation processor 322 can receive a prompt that is generated based on the story outline to the information describing the third media items, and, in response to the prompt, asset curation processor 322 generates a completion, which is the output generated upon applying the prompt to the adapter.

In some embodiments, method 400 (FIG. 4A) is performed at a first computer system (as described herein) via a system process (e.g., an operating system process, a server system process) that is different from one or more applications executing and/or installed on the first computer system.

In some embodiments, method 400 (FIG. 4A) is performed at a first computer system (as described herein) by an application that is different from a system process. In some embodiments, the instructions of the application, when executed, control the first computer system to perform method 400 (FIG. 4A) by calling an application programming interface (API) provided by the system process. In some embodiments, the application performs at least a portion of method 400 without calling the API.

In some embodiments, the application can be any suitable type of application, including, for example, one or more of: a browser application, an application that functions as an execution environment for plug-ins, widgets or other applications, a fitness application, a health application, a digital payments application, a media application, a social network application, a messaging application, and/or a maps application.

In some embodiments, the application is an application that is pre-installed on the first computer system at purchase (e.g., a first party application). In other embodiments, the application is an application that is provided to the first computer system via an operating system update file (e.g., a first party application). In other embodiments, the application is an application that is provided via an application store. In some implementations, the application store is pre-installed on the first computer system at purchase (e.g., a first party application store) and allows download of one or more applications. In some embodiments, the application store is a third party application store (e.g., an application store that is provided by another device, downloaded via a network, and/or read from a storage device). In some embodiments, the application is a third party application (e.g., an app that is provided by an application store, downloaded via a network, and/or read from a storage device). In some embodiments, the application controls the first computer system to perform method 400 (FIG. 4A) by calling an application programming interface (API) provided by the system process using one or more parameters.

In some embodiments, at least one API is a software module (e.g., a collection of computer-readable instructions) that provides an interface that allows a different set of instructions (e.g., API calling instructions) to access and use one or more functions, methods, procedures, data structures, classes, and/or other services provided by a set of implementation instructions of the system process. The API can define one or more parameters that are passed between the API calling instructions and the implementation instructions.

As described above, in some embodiments, the application controls the first computer system to perform method 400 (FIG. 4A) by calling an application programming interface (API) provided by the system process using one or more parameters.

In some embodiments, exemplary APIs provided by the system process include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a WiFi API, a bluetooth API, an NFC API, a UWB API, a fitness API, a smart home API, contact transfer API, photos API, camera API, and/or image processing API.

In some embodiments, the set of implementation instructions is a system software module (e.g., a collection of computer-readable instructions) that is constructed to perform an operation in response to receiving an API call via the API. In some embodiments, the set of implementation instructions is constructed to provide an API response (via the API) as a result of processing an API call. In some embodiments, the set of implementation instructions is included in the device (e.g., 100) that runs the application. In some embodiments, the set of implementation instructions is included in an electronic device that is separate from the device that runs the application.

As described herein, content is automatically generated by one or more computers in response to a request to generate the content. The automatically-generated content is optionally generated on-device (e.g., generated at least in part by a computer system at which a request to generate the content is received) and/or generated off-device (e.g., generated at least in part by one or more nearby computers that are available via a local network or one or more computers that are available via the internet). This automatically-generated content optionally includes visual content (e.g., images, graphics, and/or video), audio content, and/or text content.

In some embodiments, novel automatically-generated content that is generated via one or more artificial intelligence (AI) processes is referred to as generative content (e.g., generative images, generative graphics, generative video, generative audio, and/or generative text). Generative content is typically generated by an AI process based on a prompt that is provided to the AI process. An AI process typically uses one or more AI models to generate an output based on an input. An AI process optionally includes one or more pre-processing steps to adjust the input before it is used by the AI model to generate an output (e.g., adjustment to a user-provided prompt, creation of a system-generated prompt, and/or AI model selection). An AI process optionally includes one or more post-processing steps to adjust the output by the AI model (e.g., passing AI model output to a different AI model, upscaling, downscaling, cropping, formatting, and/or adding or removing metadata) before the output of the AI model used for other purposes such as being provided to a different software process for further processing or being presented (e.g., visually or audibly) to a user.

A prompt for generating generative content can include one or more of: one or more words (e.g., a natural language prompt that is written or spoken), one or more images, one or more drawings, and/or one or more videos. AI processes can include machine learning models including neural networks. Neural networks can include transformer-based deep neural networks such as large language models (LLMs). Generative pre-trained transformer models are a type of LLM that can be effective at generating novel generative content based on a prompt. Some AI processes use a prompt that includes text to generate either different generative text, generative audio content, and/or generative visual content. Some AI processes use a prompt that includes visual content and/or an audio content to generate generative text (e.g., a transcription of audio and/or a description of the visual content). Some multi-modal AI processes use a prompt that includes multiple types of content (e.g., text, images, audio, video, and/or other sensor data) to generate generative content. A prompt sometimes also includes values for one or more parameters indicating an importance of various parts of the prompt. Some prompts include a structured set of instructions that can be understood by an AI process that include phrasing, a specified style, relevant context (e.g., starting point content and/or one or more examples), and/or a role for the AI process.

Generative content is generally based on the prompt but is not deterministically selected from pre-generated content and is, instead, generated using the prompt as a starting point. In some embodiments, pre-existing content (e.g., audio, text, and/or visual content) is used as part of the prompt for creating generative content (e.g., the pre-existing content is used as a starting point for creating the generative content). For example, a prompt could request that a block of text be summarized or rewritten in a different tone, and the output would be generative text that is summarized or written in a different tone. Similarly a prompt could request that visual content be modified to include or exclude content specified by a prompt (e.g., removing an identified feature in the visual content, adding a feature to the visual content that is described in a prompt, changing a visual style of the visual content, and/or creating additional visual elements outside of a spatial or temporal boundary of the visual content that are based on the visual content). In some embodiments, a random or pseudo-random seed is used as part of the prompt for creating generative content (e.g., the random or pseud-random seed content is used as a starting point for creating the generative content). For example when generating an image from a diffusion model, a random noise pattern is iteratively denoised based on the prompt to generate an image that is based on the prompt. While specific types of AI processes have been described herein, it should be understood that a variety of different AI processes could be used to generate generative content based on a prompt.

Some embodiments described herein can include use of artificial intelligence and/or machine learning systems (sometimes referred to herein as the AI/ML systems). The use can include collecting, processing, labeling, organizing, analyzing, recommending and/or generating data. Entities that collect, share, and/or otherwise utilize user data should provide transparency and/or obtain user consent when collecting such data. The present disclosure recognizes that the use of the data in the AI/ML systems can be used to benefit users. For example, the data can be used to train models that can be deployed to improve performance, accuracy, and/or functionality of applications and/or services. Accordingly, the use of the data enables the AI/ML systems to adapt and/or optimize operations to provide more personalized, efficient, and/or enhanced user experiences. Such adaptation and/or optimization can include tailoring content, recommendations, and/or interactions to individual users, as well as streamlining processes, and/or enabling more intuitive interfaces. Further beneficial uses of the data in the AI/ML systems are also contemplated by the present disclosure.

The present disclosure contemplates that, in some embodiments, data used by AI/ML systems includes publicly available data. To protect user privacy, data may be anonymized, aggregated, and/or otherwise processed to remove or to the degree possible limit any individual identification. As discussed herein, entities that collect, share, and/or otherwise utilize such data should obtain user consent prior to and/or provide transparency when collecting such data. Furthermore, the present disclosure contemplates that the entities responsible for the use of data, including, but not limited to data used in association with AI/ML systems, should attempt to comply with well-established privacy policies and/or privacy practices.

For example, such entities may implement and consistently follow policies and practices recognized as meeting or exceeding industry standards and regulatory requirements for developing and/or training AI/ML systems. In doing so, attempts should be made to ensure all intellectual property rights and privacy considerations are maintained. Training should include practices safeguarding training data, such as personal information, through sufficient protections against misuse or exploitation. Such policies and practices should cover all stages of the AI/ML systems development, training, and use, including data collection, data preparation, model training, model evaluation, model deployment, and ongoing monitoring and maintenance. Transparency and accountability should be maintained throughout. Such policies should be easily accessible by users and should be updated as the collection and/or use of data changes. User data should be collected for legitimate and reasonable uses of the entity and not shared or sold outside of those legitimate uses. Further, such collection and sharing should occur through transparency with users and/or after receiving the informed consent of the users. Additionally, such entities should consider taking any needed steps for safeguarding and securing access to such data and ensuring that others with access to the data adhere to their privacy policies and procedures. Further, such entities should subject themselves to evaluation by third parties to certify, as appropriate for transparency purposes, their adherence to widely accepted privacy policies and practices. In addition, policies and/or practices should be adapted to the particular type of data being collected and/or accessed and tailored to a specific use case and applicable laws and standards, including jurisdiction-specific considerations.

In some embodiments, AI/ML systems may utilize models that may be trained (e.g., supervised learning or unsupervised learning) using various training data, including data collected using a user device. Such use of user-collected data may be limited to operations on the user device. For example, the training of the model can be done locally on the user device so no part of the data is sent to another device. In other implementations, the training of the model can be performed using one or more other devices (e.g., server(s)) in addition to the user device but done in a privacy preserving manner, e.g., via multi-party computation as may be done cryptographically by secret sharing data or other means so that the user data is not leaked to the other devices.

In some embodiments, the trained model can be centrally stored on the user device or stored on multiple devices, e.g., as in federated learning. Such decentralized storage can similarly be done in a privacy preserving manner, e.g., via cryptographic operations where each piece of data is broken into shards such that no device alone (i.e., only collectively with another device(s)) or only the user device can reassemble or use the data. In this manner, a pattern of behavior of the user or the device may not be leaked, while taking advantage of increased computational resources of the other devices to train and execute the ML model. Accordingly, user-collected data can be protected. In some implementations, data from multiple devices can be combined in a privacy-preserving manner to train an ML model.

In some embodiments, the present disclosure contemplates that data used for AI/ML systems may be kept strictly separated from platforms where the AI/ML systems are deployed and/or used to interact with users and/or process data. In such embodiments, data used for offline training of the AI/ML systems may be maintained in secured datastores with restricted access and/or not be retained beyond the duration necessary for training purposes. In some embodiments, the AI/ML systems may utilize a local memory cache to store data temporarily during a user session. The local memory cache may be used to improve performance of the AI/ML systems. However, to protect user privacy, data stored in the local memory cache may be erased after the user session is completed. Any temporary caches of data used for online learning or inference may be promptly erased after processing. All data collection, transfer, and/or storage should use industry-standard encryption and/or secure communication.

In some embodiments, as noted above, techniques such as federated learning, differential privacy, secure hardware components, homomorphic encryption, and/or multi-party computation among other techniques may be utilized to further protect personal information data during training and/or use of the AI/ML systems. The AI/ML systems should be monitored for changes in underlying data distribution such as concept drift or data skew that can degrade performance of the AI/ML systems over time.

In some embodiments, the AI/ML systems are trained using a combination of offline and online training. Offline training can use curated datasets to establish baseline model performance, while online training can allow the AI/ML systems to continually adapt and/or improve. The present disclosure recognizes the importance of maintaining strict data governance practices throughout this process to ensure user privacy is protected.

In some embodiments, the AI/ML systems may be designed with safeguards to maintain adherence to originally intended purposes, even as the AI/ML systems adapt based on new data. Any significant changes in data collection and/or applications of an AI/ML system use may (and in some cases should) be transparently communicated to affected stakeholders and/or include obtaining user consent with respect to changes in how user data is collected and/or utilized.

Despite the foregoing, the present disclosure also contemplates embodiments in which users selectively restrict and/or block the use of and/or access to data. That is, the present disclosure contemplates that hardware and/or software elements can be provided to prevent or block access to data. For example, in the case of some services, the present technology should be configured to allow users to select to "opt in" or "opt out" of participation in the collection of data during registration for services or anytime thereafter. In another example, the present technology should be configured to allow users to select not to provide certain data for training the AI/ML systems and/or for use as input during the inference stage of such systems. In yet another example, the present technology should be configured to allow users to be able to select to limit the length of time data is maintained or entirely prohibit the use of their data for use by the AI/ML systems. In addition to providing "opt in" and "opt out" options, the present disclosure contemplates providing notifications relating to the access or use of personal information. For instance, a user can be notified when their data is being input into the AI/ML systems for training or inference purposes, and/or reminded when the AI/ML systems generate outputs or make decisions based on their data.

The present disclosure recognizes AI/ML systems should incorporate explicit restrictions and/or oversight to mitigate against risks that may be present even when such systems having been designed, developed, and/or operated according to industry best practices and standards. For example, outputs may be produced that could be considered erroneous, harmful, offensive, and/or biased; such outputs may not necessarily reflect the opinions or positions of the entities developing or deploying these systems. Furthermore, in some cases, references to third-party products and/or services in the outputs should not be construed as endorsements or affiliations by the entities providing the AI/ML systems. Generated content can be filtered for potentially inappropriate or dangerous material prior to being presented to users, while human oversight and/or ability to override or correct erroneous or undesirable outputs can be maintained as a failsafe.

The present disclosure further contemplates that users of the AI/ML systems should refrain from using the services in any manner that infringes upon, misappropriates, or violates the rights of any party. Furthermore, the AI/ML systems should not be used for any unlawful or illegal activity, nor to develop any application or use case that would commit or facilitate the commission of a crime, or other tortious, unlawful, or illegal act. The AI/ML systems should not violate, misappropriate, or infringe any copyrights, trademarks, rights of privacy and publicity, trade secrets, patents, or other proprietary or legal rights of any party, and appropriately attribute content as required. Further, the AI/ML systems should not interfere with any security, digital signing, digital rights management, content protection, verification, or authentication mechanisms. The AI/ML systems should not misrepresent machine-generated outputs as being human-generated.

The foregoing description, for the purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the techniques and their practical applications. Others skilled in the art are thereby enabled to best utilize the techniques and various embodiments with various modifications as are suited to the particular use contemplated.

Although the disclosure and examples have been fully described with reference to the accompanying drawings, it is to be noted that various changes and modifications will become apparent to those skilled in the art. Such changes and modifications are to be understood as being included within the scope of the disclosure and examples as defined by the claims.

As described above, one aspect of the present technology is the gathering and use of data available from various sources to improve the delivery to users of invitational content or any other content that may be of interest to them. The present disclosure contemplates that in some instances, this gathered data can include personal information data that uniquely identifies or can be used to contact or locate a specific person. Such personal information data can include demographic data, location-based data, telephone numbers, email addresses, home addresses, or any other identifying information.

The present disclosure recognizes that the use of such personal information data, in the present technology, can be used to the benefit of users. For example, the personal information data can be used to deliver targeted content that is of greater interest to the user. Accordingly, use of such personal information data enables calculated control of the delivered content. Further, other uses for personal information data that benefit the user are also contemplated by the present disclosure.

The present disclosure further contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. For example, personal information from users should be collected for legitimate and reasonable uses of the entity and not shared or sold outside of those legitimate uses. Further, such collection should occur only after receiving the informed consent of the users. Additionally, such entities would take any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of advertisement delivery services, the present technology can be configured to allow users to select to "opt in" or "opt out" of participation in the collection of personal information data during registration for services. In some examples, users can select not to provide location information for targeted content delivery services. In some examples, users can select to not provide precise location information, but permit the transfer of location zone information.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, content can be selected and delivered to users by inferring preferences based on non-personal information data or a bare minimum amount of personal information, such as the content being requested by the device associated with a user, other non-personal information available to the content delivery services, or publicly available information.

For clarity of explanation, in some instances the present technology may be presented as including individual functional blocks including functional blocks comprising devices, device components, steps or routines in a method embodied in software, or combinations of hardware and software.

Applications, processors, modules, and machine-learning models disclosed herein can be performed or implemented by a combination of hardware and software services, alone or in combination with other devices. Applications, processors, modules, and machine-learning models can be performed or implemented as software or computer instructions stored on a computer-readable media that are then executed using digital circuitry performing digital logic (e.g., a central processing unit, a microprocessor, computer circuitry, or a combination thereof). In some embodiments, applications, processors, modules, and machine-learning models can be software that resides in memory of a client device and/or one or more servers of a content management system and perform one or more functions when a processor executes the software associated with the service. In some embodiments, a service is a program, or a collection of programs that carry out a specific function. In some embodiments, applications, processors, modules, and machine-learning models can be performed using a server. The memory can be a non-transitory computer-readable medium.

In some embodiments, the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer readable media. Such instructions can comprise, for example, instructions and data which cause or otherwise configure a general-purpose computer, special-purpose computer, or special-purpose processing device to perform a certain function or group of functions. Portions of computer resources used can be accessible over a network. The computer-executable instructions may be, for example, binaries, intermediate format instructions such as assembly language, firmware, or source code. Examples of computer-readable media that may be used to store instructions, information used, and/or information created during methods according to described examples include magnetic or optical disks, solid-state memory devices, flash memory, USB devices provided with non-volatile memory, networked storage devices, and so on.

Devices implementing methods according to these disclosures can comprise hardware, firmware and/or software, and can take any of a variety of form factors. Typical examples of such form factors include servers, laptops, smart phones, small form factor personal computers, personal digital assistants, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

### NUMBERED STATEMENTS OF THE INVENTION

1. A method of generating a video from media assets on a device, the method comprising:
   obtaining, at the device, a request to generate the video based on one or more user inputs that include a natural language description of a memory to be depicted in the video;
   providing first information representing the natural language description to a first model, and, in response to providing the first information, receiving query tokens generated based on the first information;
   searching the media assets on the device to find first media items that match the query tokens;
   providing, to a second model, second information representing second media items that include the first media items, and, in response to providing the second information, receiving traits generated based on the second information;
   providing third information representing the traits to a third model, and, in response to providing the third information, and, in response to providing the third information, receiving a story outline that is based on the third information;
   selecting, based on the story outline, third media items from the second media items; and
   arranging and combining the third media items in accordance with the story outline to generate the video depicting the memory associated with the natural language description.
2. The method of statement 1, further comprising:
   finding additional media items on the device based on a similarity of the additional media items to the first media items to generate the second media items that include the first media items and the additional media items.
3. The method of statement 1, wherein:
   the first model, the second mode, and the third model are each machine-learning models,
   the first model is an adapter of a large language model that is located remotely from the device, and
   the third model is another adapter of the large language model that is located remotely from the device.
4. The method of statement 1, wherein selecting the third media items from the second media items further includes:
   determining a subset of the second media items by applying information of the story outline together with information of the second media items to a neural network that, in response, outputs labels of the subset of the second media items; and
   providing instructions including information of the subset of the second media items and the information of the story outline to a fourth model, and in response to providing the instructions, receiving from the fourth model labels of the third media items, wherein
   the story outline includes a plurality of descriptions of shots in the video, and each media item of the third media items matches a respective description of a shot of the story outline.
5. The method of statement 1, wherein the searching of the media assets on the device to find the first media items includes performing a metadata search and an embedding search, wherein the metadata search determines matches and/or similarities between the query tokens and metadata of the first media items, and the embedding search determines matches and/or similarities between the query tokens and embeddings of the first media items, the embeddings being visual features that are identified and labeled in the first media items.
6. The method of statement 1, wherein:
   the story outline includes descriptions of shots for a montage of photos, and
   the selecting of the third media items from the first media items includes matching each of the shots to respective photos in the first media items based on similarities between the descriptions of shots and embeddings of the first media items.
7. The method of statement 1, further comprising:
   determining, based on the story outline, music that accompanies the video.
8. The method of statement 1, wherein the story outline is subdivided into chapters and the chapters are subdivided into shots, and each of the chapters includes a respective title.
9. The method of statement 1, further comprising:
   determining additional traits based on the media assets on the device, the additional traits representing common features in respective clusters of the media assets on the device; and
   providing, to the third model, the additional traits together with the traits and the second information, and, in response to providing the additional traits, receiving the story outline, wherein
   the story outline, is based on the additional traits, the traits, and the second information.
10. The method of statement 1, further comprising:
   retrieving a subset of the media assets based on the natural language description; and
   displaying the subset of the media assets in a transition user interface while the video is being generated.
11. A method of supporting a device to generate a video from media assets on the device, the method comprising:
   obtaining, at a server, first information from the device, the first information representing a natural language description from a request to generate the video of a memory;
   applying the first information to a model that generates, in response to the first information, query tokens representing features and/or attributes associated with the memory to look for in media assets on the device;
   providing, from the server to the device, the query tokens;
   receiving, at the server, second information from the device, the second information representing features and/or attributes depicted in first media items;
   applying the second information to a second model that generates, in response to the second information, traits of the first media items, and providing the traits to the device;
   receiving, at the server, information of the traits; and
   applying the descriptions of second media items to a third model that, in response, generates a story outline, wherein the story outline provides a narrative structure for curating and arranging second media items into the video of the memory.
12. The method of statement 11, further comprising:
   receiving, at the server, descriptions of second media items; and
   applying the descriptions of the second media items together with the information of the story outline to a fourth model that, in response, selects from the second media items respective media items corresponding to shots described in the story outline, wherein the respective media items are selected based on matching descriptions of the corresponding shots.
13. The method of statement 11, wherein the second model is a machine-learning model that has been trained using training data that comprises training outlines associated with training videos.
14. The method of statement 11, wherein:
   the first model, the second mode, and the third model are each machine-learning models,
   the first model is an adapter to a large language model, and
   the adapter has been trained using supervised fine-tuning to modify weights of a neural network in the first model to provide output traits that include a location, a time, and a setting corresponding to inputs of natural language prompts describing a memory.
15. A device comprising:
   one or more processors; and
   a memory storing instructions that, when executed by the one or more processors, configure the device to:
      obtain, at a device, a request to generate a video based on one or more user inputs that include a natural language description of a memory to be depicted in the video;
      provide first information representing the natural language description to a first model, and, in response to providing the first information, receive query tokens generated based on the first information;
      search media assets on the device to find first media items that match the query tokens;
      provide, to a second model, second information representing second media items that include the first media items, and, in response to providing the second information, receive traits generated based on the second information;
      provide third information representing the traits to a third model, and, in response to providing the third information, receive a story outline that is based on the third information;
      select, based on the story outline, third media items from the second media items; and
      arrange and combine the third media items in accordance with the story outline to generate the video depicting the memory associated with the natural language description.
16. The device of statement 15, wherein, when executed by the one or more processors, the instructions further configure the device to:
   find additional media items on the device based on a similarity of the additional media items to the first media items to generate the second media items, the second media items including the first media items and the additional media items.
17. The device of statement 15, wherein, when executed by the one or more processors, the instructions further cause the device to search the media assets to find the first media items by configuring the device to:
   perform a metadata search and an embedding search, wherein
   the metadata search determines matches and/or similarities between the query tokens and metadata of the first media items, and
   the embedding search determines matches and/or similarities between the query tokens and embeddings of the first media items, the embeddings being visual features that are identified and labeled in the first media items.
18. The device of statement 15, wherein:
   the story outline includes descriptions of shots for a montage of photos, and
   the selecting of the third media items from the first media items includes matching each of the shots to respective photos in the first media items based on similarities between the descriptions of shots and embeddings of the first media items.
19. The device of statemen 15, wherein, when executed by the one or more processors, the instructions further configure the device to:
   determine additional traits based on the media assets on the device, the additional traits representing common features in respective clusters of the media assets on the device; and
   provide, to the third model, the additional traits together with the traits and the second information, and, in response to providing the additional traits, receiving the story outline, wherein
   the story outline is based on the additional traits, the traits, and the second information.
20. The device of statement 15, wherein, when executed by the one or more processors, the instructions cause the device to select the third media items from the second media items by configuring the device to:
   determine a subset of the second media items by applying information of the story outline together with information of the second media items to a neural network that, in response, outputs labels of the subset of the second media items; and
   provide instructions including information of the subset of the second media items and the information of the story outline to a fourth model, and, in response to providing the instructions, receive from the fourth model labels of the third media items, wherein
   the story outline includes a plurality of descriptions of shots in the video, and each media item of the third media items matches a respective description of a shot of the story outline.

## Claims

1. A method of generating a video from media assets on a device, the method comprising:
obtaining, at the device, a request to generate the video based on one or more user inputs that include a natural language description of a memory to be depicted in the video;
providing first information representing the natural language description to a first model, and, in response to providing the first information, receiving query tokens generated based on the first information;
searching the media assets on the device to find first media items that match the query tokens;
providing, to a second model, second information representing second media items that include the first media items, and, in response to providing the second information, receiving traits generated based on the second information;
providing third information representing the traits to a third model, and, in response to providing the third information, and, in response to providing the third information, receiving a story outline that is based on the third information;
selecting, based on the story outline, third media items from the second media items; and
arranging and combining the third media items in accordance with the story outline to generate the video depicting the memory associated with the natural language description.

2. The method of claim 1, further comprising:
finding additional media items on the device based on a similarity of the additional media items to the first media items to generate the second media items that include the first media items and the additional media items.

3. The method of claim 1 or 2, wherein:
the first model, the second mode, and the third model are each machine-learning models,
the first model is an adapter of a large language model that is located remotely from the device, and
the third model is another adapter of the large language model that is located remotely from the device.

4. The method of any preceding claim, wherein selecting the third media items from the second media items further includes:
determining a subset of the second media items by applying information of the story outline together with information of the second media items to a neural network that, in response, outputs labels of the subset of the second media items; and
providing instructions including information of the subset of the second media items and the information of the story outline to a fourth model, and in response to providing the instructions, receiving from the fourth model labels of the third media items, wherein
the story outline includes a plurality of descriptions of shots in the video, and each media item of the third media items matches a respective description of a shot of the story outline.

5. The method of any preceding claim, wherein the searching of the media assets on the device to find the first media items includes performing a metadata search and an embedding search, wherein the metadata search determines matches and/or similarities between the query tokens and metadata of the first media items, and the embedding search determines matches and/or similarities between the query tokens and embeddings of the first media items, the embeddings being visual features that are identified and labeled in the first media items.

6. The method of any preceding claim, wherein:
the story outline includes descriptions of shots for a montage of photos, and
the selecting of the third media items from the first media items includes matching each of the shots to respective photos in the first media items based on similarities between the descriptions of shots and embeddings of the first media items.

7. The method of any preceding claim, further comprising:
determining, based on the story outline, music that accompanies the video.

8. The method of any preceding claim, wherein the story outline is subdivided into chapters and the chapters are subdivided into shots, and each of the chapters includes a respective title.

9. The method of any preceding claim, further comprising:
determining additional traits based on the media assets on the device, the additional traits representing common features in respective clusters of the media assets on the device; and
providing, to the third model, the additional traits together with the traits and the second information, and, in response to providing the additional traits, receiving the story outline, wherein
the story outline, is based on the additional traits, the traits, and the second information.

10. The method of any preceding claim, further comprising:
retrieving a subset of the media assets based on the natural language description; and
displaying the subset of the media assets in a transition user interface while the video is being generated.

11. A method of supporting a device to generate a video from media assets on the device, the method comprising:
obtaining, at a server, first information from the device, the first information representing a natural language description from a request to generate the video of a memory;
applying the first information to a model that generates, in response to the first information, query tokens representing features and/or attributes associated with the memory to look for in media assets on the device;
providing, from the server to the device, the query tokens;
receiving, at the server, second information from the device, the second information representing features and/or attributes depicted in first media items;
applying the second information to a second model that generates, in response to the second information, traits of the first media items, and providing the traits to the device;
receiving, at the server, information of the traits; and
applying the descriptions of second media items to a third model that, in response, generates a story outline, wherein the story outline provides a narrative structure for curating and arranging second media items into the video of the memory.

12. The method of claim 11, further comprising:
receiving, at the server, descriptions of second media items; and
applying the descriptions of the second media items together with the information of the story outline to a fourth model that, in response, selects from the second media items respective media items corresponding to shots described in the story outline, wherein the respective media items are selected based on matching descriptions of the corresponding shots.

13. The method of claim 1 or 12, wherein:
the first model, the second mode, and the third model are each machine-learning models,
the first model is an adapter to a large language model, and
the adapter has been trained using supervised fine-tuning to modify weights of a neural network in the first model to provide output traits that include a location, a time, and a setting corresponding to inputs of natural language prompts describing a memory.

14. A device comprising:
one or more processors; and
a memory storing instructions that, when executed by the one or more processors, configure the device to perform the method of any of claims 1 to 10.

15. A server comprising:
one or more processors; and
a memory storing instructions that, when executed by the one or more processors, configure the device to perform the method of any of claims 11 to 13.
